# EUROPÄISCHE PATENTSCHRIFT

(11) **EP 4 339 039 B1**
(45) Veröffentlichungstag und Bekanntmachung des Hinweises auf die Patenterteilung: **18.12.2024**
(21) Anmeldenummer: 24020036.0
(22) Anmeldetag: 08.09.2021
(51) Int. Cl.: B60R 21/017

(54) **VERFAHREN ZUR VERHINDERUNG DER NICHTAUSLÖSUNG VON AIRBAGS DURCH KURZSCHLÜSSE AN ZULEITUNGEN ANDERER AIRBAGS**
METHOD FOR PREVENTING NON-DEPRESSION OF AIRBAGS BY SHORT CIRCUITING OF OTHER AIRBAGS
PROCÉDÉ POUR EMPÊCHER LE DÉCLENCHEMENT NON D'AIRBAGS À PARTIR DE COURTS-CIRCUITS À DES CONDUCTEURS D'AUTRES COUSSINS GONFLABLES

(30) Priorität: 05.10.2020 DE 102020126014
(43) Veröffentlichungstag der Anmeldung: 20.03.2024
(62) Teilanmeldung aus: 21777627.7
(73) Patentinhaber: Elmos Semiconductor SE, 44227 Dortmund (DE)
(72) Erfinder: Sudhaus, André, 45665 Recklinghausen (DE); Frieman, Uwe, 44359 Dortmund (DE)

(56) Entgegenhaltungen:
- DE-A1- 10 255 429
- DE-A1- 102014 225 960
- DE-A1- 3 738 862
- DE-A1- 3 925 594

## Beschreibung

### Feld der Erfindung

Verfahren zum Betrieb einer sicherheitsrelevanten Steuervorrichtung für Fahrzeuge, insbesondere für eine Airbag-Steuervorrichtung.

### Einleitung

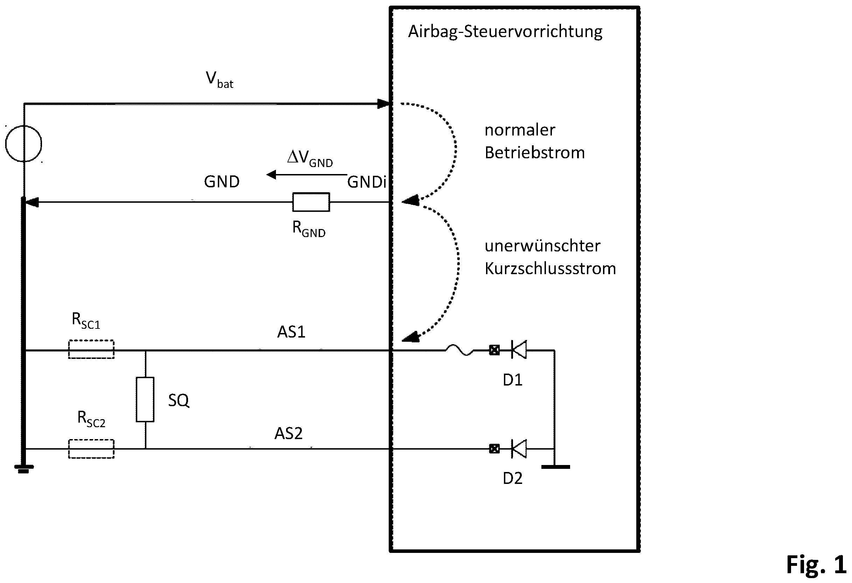

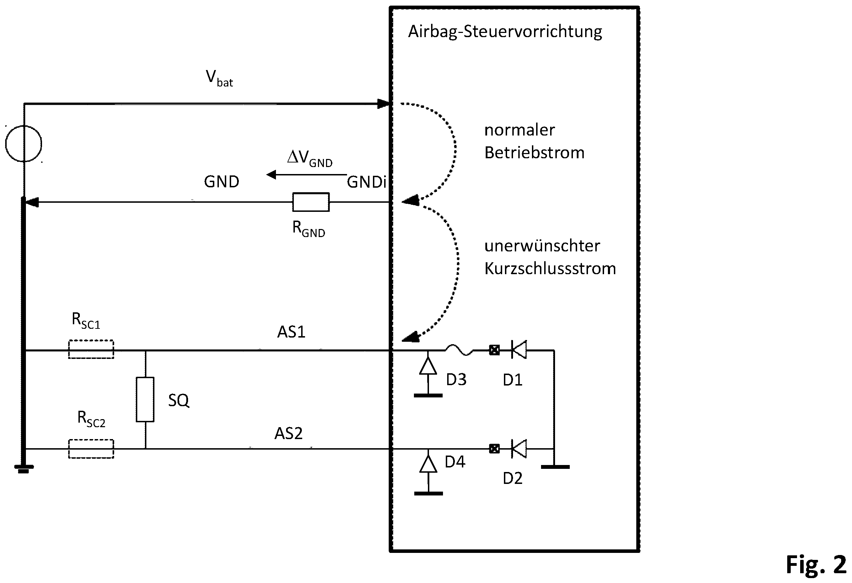

Die hier vorgelegte Schrift erläutert die Probleme des Stands der Technik anhand der Figuren 1 und 2 aus dem Stand der Technik.

Sicherheitsrelevante Applikationen wie ein Airbag-Steuergerät weisen die Notwendigkeit auf, auch bei Vorliegen äußerer Fehlereinflüsse z.B. im Zusammenhang mit Unfällen möglichst ausfallsicher funktionieren zu müssen. Solche Ausfälle äußerer Fehlereinflüsse können beispielsweise Kurzschlüsse und Unterbrechungen im Kabelbaum sein. Die modernen Airbag-Steuergeräte umfassen heute typischerweise integrierte Schaltungen, bei denen bevorzugt eine integrierte Schaltung mehrere Zündpillen der Airbags zündet. Dabei ist je Zündpille typischerweise ein Zündkreis vorgesehen, mittels dessen die betreffende integrierte Schaltung innerhalb des Airbag-Steuergeräts die Zündpille im Falle eines Unfalls zündet und für eine Entfaltung des Airbags sorgt. Ein Kurzschluss an einer Zuleitung einer Zündpille gegen die Fahrzeugmasse darf dabei die Zündung der anderen Zündpillen der anderen Zündkreise nicht verhindern oder beeinträchtigen.

Im Falle eines Unfalls können jedoch durchaus ein oder mehrere Zuleitungen der Zündpillen eines Airbag-Zündsystems in Folge der hohen unvorhersehbaren mechanischen Einwirkungen in Kontakt mit elektrisch leitenden Teilen der Karosserie geraten. Hierdurch können sehr niederohmige Kurzschlüsse einer Zuleitung einer Zündpille gegen die Fahrzeugmasse entstehen. Weist nun die Massezuleitung des Airbag-Steuergeräts einen größeren Zuleitungswiderstand auf, so kann über diesen Zuleitungswiderstand eine Spannung gegenüber der echten Fahrzeugmasse abfallen. In Folge dessen befindet sich dann der Masse-Anschluss des Airbag-Steuergeräts (GNDi) auf einem höheren elektrischen Potenzial als der gegen die Fahrzeugmasse kurzgeschlossene Anschluss der Zündpille.

Dies führt in der Konsequenz zu einem ungewollten Stromfluss von der Massezuleitung des Airbag-Steuergeräts (GNDi) über die ESD-Dioden oder parasitären Dioden D1 und D2 zu dem kurzgeschlossenen Anschluss der Zündpille. Diese Kurzschlüsse treten also primär an den Treiberleitungen der Zündpille auf.

Ein solcher, ungewollter Stromfluss kann zu einer nicht zulässigen Beeinträchtigung sicherheitsrelevanter Funktionalitäten führen. Eine aus dem Stand der Technik bekannte Lösung ist die Verwendung von Dioden. Diese Dioden verbinden einen gegen die Fahrzeugmasse kurzgeschlossenen Anschluss der Zündpille mit dem Masse-Anschluss des Airbag-Steuergeräts, wenn die Spannungsdifferenz zwischen der Fahrzeugmasse und dem Potenzial Masse-Anschluss des Airbag-Steuergeräts größer ist als die Schleusenspannung der betreffenden Diode. Diese Dioden verbinden einen gegen die Fahrzeugmasse kurzgeschlossenen Anschluss der Zündpille mit dem Masse-Anschluss des Airbag-Steuergeräts also dann, wenn die Fahrzeugmasse also um mehr als die Schleusenspannung der Diode unter dem Potenzial des Masse-Anschlusses des Airbag-Steuergeräts liegt. Diese Dioden D3, D4 können die dann entstehenden Ausgleichströme an dem relevanten Anschluss der Zündpille vorbeiführen. Dies ist in Figur 2 dargestellt und entspricht dem Stand der Technik. Diese Lösung aus dem Stand der Technik stellt eine kostenintensive Lösung mit ungünstiger Diagnosefähigkeit beispielsweise bedingt durch zusätzliche Leckströme dar.

Das sicherheitsrelevante Airbag-Steuergerät soll insbesondere diagnostizierbar bzw. zündfähig hinsichtlich der Squib-Treibladungen bleiben, sofern Fehlereinflüsse wie oben angedeutet auftreten, bei denen gleichzeitig sowohl von Kurzschlüssen zur Fahrzeugmasse, als auch von einem erhöhten GND Widerstand ausgegangen werden muss.

Die kurzgeschlossenen Anschlüsse der Zündpille führen dann in diesem Fehlerfall durch das über den Massewiderstand ansteigende Massepotential des Masseanschlusses des Airbag-Steuergeräts den Massestrom potentiell über zumindest in Teilen in die Fahrzeugmasse hinein ab. Dies führt zu einer Substratstrominjektion in der betreffenden integrierten Schaltung des Airbag-Steuergeräts mit dem hohen Potenzial, Folgefehler zu generieren.

Im Rahmen von Recherchen zum Artikel vom 29.04.2019 wurde offenbar, dass auch bei bestehenden Applikationen im automobilen Umfeld mutmaßlich in ähnlicher Art und Weise ein auftretender EOS die angeforderten, beabsichtigten Zündvorgänge im Falle eines ungünstig verlaufenden Unfalls unterbinden kann.

(Quelle: https://www.pcwelt.de/news/Riesen-Rueckruf-droht-Ueber-12-Millionen-Airbags-koennten-versagen-10581707.html)

Beispielhafte Airbag-Schaltungen aus dem Stand der Technik sind die DE 10 2014 255 960, die DE 39 25 594 A1 und die DE 3 738 862 A1. Aus der DE 102 55 429 A1 ist eine relevante Vorrichtung mit Funktionsautakie bekannt.

### Aufgabe

Die Aufgabe, die dem Vorschlag zugrunde liegt, ist es daher, eine Lösung zu schaffen, die die obigen Nachteile des Stands der Technik nicht aufweist und weitere Vorteile aufweist.

Im Applikationsumfeld von Airbags soll im Falle von Masseversatz kein Substratstrom und damit keine negative Beeinflussung sicherheitsrelevanter Funktionen auftreten.

Verfahren nach den unabhängigen Ansprüchen lösen diese Aufgabe. Weitere Ausgestaltungen sind Gegenstand von Unteransprüchen.

### Lösung der Aufgabe

Sicherheitsrelevante Systeme wie z.B. Airbag-Steuergeräte weisen bevorzugt Energiespeicher auf. Diese Energiespeicher dienen zur zumindest zeitweisen energetischen Selbstversorgung. Diese Selbstversorgung ist notwendig im Falle einer Unterbrechung der Energieversorgung in Zusammenhang mit einem Unfall. Airbag-Steuergeräte können bevorzugt diesen Betriebszustand einer energetischen Notversorgung aus der Energiereserve aktiv forcieren.

Die kostengünstigere Alternative im Vergleich zur Lösung der Figur 2 besteht darin, den Modul-Versorgungsstrom temporär auf ein Minimum zu reduzieren. Typischerweise verfügen die Airbag-Steuersysteme über einen solchen Betriebsmodus mit geringerem Energieverbrauch, den so genannten Autarky-Betrieb mit einer Eigenversorgung über eine Energiereserve. Als Energiereserve verwendet solche Vorrichtungen bevorzugt Kondensatoren.

Die Energieversorgung der Vorrichtung kann den Autarky-Betrieb kann über den typischerweise für Airbag-Steuergeräte verfügbaren Betriebsmodus mittels Selbstversorgung (auch Autarky genannt) aus der besagten Energiereserve erreichen. Diese besteht in der Regel aus entsprechenden Kondensatoren entsprechender Kapazität. Ein Konstrukteur legt bevorzugt diese Kapazität typischerweise für die Zündvorgänge nach Wegfall der Batterieversorgung des Fahrzeugs aus. Potentiell kann der Fachmann diese Methode auf alle Systeme mit zumindest zeitweise verfügbarer Selbstversorgung anwenden.

Die Erfindung betrifft somit Verfahren zum Betrieb einer sicherheitsrelevanten Steuervorrichtung für Fahrzeuge, insbesondere für eine Airbag-Steuervorrichtung. Dabei weist die Steuervorrichtung eine Energiereserve auf. Das Fahrzeug weist typischerweise ein elektrisches Bordnetz mit Versorgungsspannungsleitungen auf. Die Steuervorrichtung empfängt Signale von Sensoren und/oder anderen Systemen. Die sicherheitsrelevante Steuervorrichtung weist einen ersten Betriebszustand und einen zweiten Betriebszustand auf. Dabei ist bevorzugt die Energieaufnahme der sicherheitsrelevanten Steuervorrichtung im ersten Betriebszustand betragsmäßig kleiner als im zweiten Betriebszustand. Dennoch kann bevorzugt im ersten und zweiten Betriebszustand die sicherheitsrelevante Steuervorrichtung ihre sicherheitsrelevante Funktion ausüben.

Das Verfahren umfasst bevorzugt den Schritt des Bereitstellens einer Energiereserve. Das Verfahren umfasst bevorzugt den Schritt des Auswertens der Signale der Sensoren und/oder der anderen Systeme. Das Verfahren umfasst bevorzugt den Schritt des Feststellens eines sicherheitsrelevanten Ereignisses in Abhängigkeit von den Signalen der Sensoren und/oder der anderen Systeme. Das Verfahren umfasst bevorzugt den Schritt des Umschaltens auf den zweiten Betriebszustand im Falle eines sicherheitsrelevanten Ereignisses. Das Verfahren umfasst bevorzugt den Schritt des Durchführens der sicherheitsrelevanten Funktion der sicherheitsrelevanten Steuervorrichtung im zweiten Betriebszustand.

Das Verfahren ist gekennzeichnet durch den Schritt der Versorgung der sicherheitsrelevanten Steuervorrichtung aus der Energiereserve, wenn die sicherheitsrelevante Steuervorrichtung sich im zweiten Betriebszustand befindet. Um jede Art von Störung über das Bordnetz während eines Unfalls auszuschließen erfolgt das Versorgen der sicherheitsrelevanten Steuervorrichtung nur im ersten Betriebszustand aus dem elektrischen Bordnetz des Fahrzeugs mittels der Versorgungsspannungsleitungen mit elektrischer Energie. Aus dem gleichen Grund erfolgt das Laden der Energiereserve nur im ersten Betriebszustand aus dem elektrischen Bordnetz des Fahrzeugs mittels der Versorgungsspannungsleitungen mit elektrischer Energie. Sofern es nun zu einem Unfall kommt erfolgt möglichst sofort nach der Feststellung des sicherheitsrelevanten Ereignisses ein Trennen der sicherheitsrelevanten Steuervorrichtung im zweiten Betriebszustand von dem elektrischen Bordnetz des Fahrzeugs und den Versorgungsspannungsleitungen mittels einer Trennvorrichtung. Diese Trennung sollte bevorzugt unabhängig von der Spannungsdifferenz zwischen dem Potenzial der betreffenden Versorgungsspannungsleitungen einerseits und dem Potenzial eines Bezugspotenzialknotens des sicherheitsrelevanten Steuergeräts andererseits erfolgen. Dies stellt sicher, dass keine Energie aus der Energiereserve in das Boardnetz abfließt. Daher erfolgt bevorzugt auch ein Trennen der Energiereserve im zweiten Betriebszustand von dem elektrischen Bordnetz des Fahrzeugs und den Versorgungsspannungsleitungen mittels einer Trennvorrichtung. Diese Trennung bedeutet, dass ein ggf. noch fließender Reststrom die Funktion der sicherheitsrelevanten Vorrichtung nicht mehr beeinträchtigen kann. Diese Trennung der Energiereserve vom Bordnetz erfolgt natürlich bevorzugt ebenfalls unabhängig von der Spannungsdifferenz zwischen dem Potenzial der betreffenden Versorgungsspannungsleitungen einerseits und dem Potenzial eines Bezugspotenzialknotens des Sicherheitsrelevanten Steuergeräts andererseits. Bevorzugt verwendet das vorgeschlagene Verfahren für beide Trennungen die gleiche Trennvorrichtung. Hierbei kann es sich um Transistoren oder andere elektrische Schalter handeln. Bevorzugt betätigt die sicherheitsrelevante Steuervorrichtung diese Trennvorrichtungen, wenn diese einer Betätigung bedürfen.

Das Verfahrensprinzip lässt sich auch auf die Durchführung sicherheitsrelevanter Tests anwenden. Es handelt sich dann um ein Verfahren zum Betrieb einer sicherheitsrelevanten Steuervorrichtung für Fahrzeuge, insbesondere für eine Airbag-Steuervorrichtung, wobei die Steuervorrichtung eine Energiereserve aufweist, wobei die sicherheitsrelevante Steuervorrichtung einen ersten Betriebszustand und einen zweiten Betriebszustand aufweist. Die Energieaufnahme aus der Batterie der sicherheitsrelevanten Steuervorrichtung ist bevorzugt im ersten Betriebszustand betragsmäßig höher als im zweiten Betriebszustand. Im ersten und zweiten Betriebszustand kann die sicherheitsrelevante Steuervorrichtung ihre sicherheitsrelevante Funktion ausüben, wobei die hier vorgelegte Schrift die Durchführung von sicherheitsrelevanten Tests hier als Durchführung einer sicherheitsrelevanten Funktion versteht. Das Verfahren umfasst in diesem Fall des sicherheitsrelevanten Tests dann die Schritte des Bereitstellens einer Energiereserve, des Feststellens der Notwendigkeit eines sicherheitsrelevanten Tests, des Umschaltens auf den zweiten Betriebszustand, des Durchführens des sicherheitsrelevanten Tests durch die sicherheitsrelevante Steuervorrichtung im zweiten Betriebszustand und des Zurückschaltens auf den ersten Betriebszustand. Das Verfahren zeichnet sich dabei durch den Schritt der Versorgung der sicherheitsrelevanten Steuervorrichtung aus der Energiereserve aus, wenn die sicherheitsrelevante Steuervorrichtung sich im zweiten Betriebszustand befindet. Eine Zeitscheibensteuerung oder ein Zeitgeber oder eine andere Vorrichtung können die Notwendigkeit eines sicherheitsrelevanten Tests beispielsweise feststellen.

Dieser Grundgedanke lässt sich noch erweitern. Die Ausarbeitung des hier vorgelegten Vorschlags führte zu der Erkenntnis, dass auch andere Systemkomponenten eines Fahrzeugs den Masseversatz der sicherheitsrelevanten Steuerung beeinflussen können.

Basierend auf den zuvor beschriebenen Verfahren ist daher ein Verfahren zum Betrieb einer sicherheitsrelevanten Steuervorrichtung denkbar, bei dem die sicherheitsrelevante Steuervorrichtung eine Verbindung zu mindestens einer weiteren Systemkomponente des Fahrzeugs aufweist. Solche weiteren Systemkomponenten können beispielsweise, aber nicht nur, Sitzheizungen oder Stellmotoren oder ähnliches sein, die die Vorrichtung nicht in Bezug auf die Sicherheitsfunktion benötigt und auf deren Funktion die Vorrichtung zumindest zeitweise oder speziell im Falle eines Unfalls verzichten kann. Die besagte Verbindung zwischen der sicherheitsrelevanten Steuervorrichtung und der weiteren Systemkomponente kann eine analoge oder digitale direkte Punkt-zu-Punkt-Verbindung zwischen der sicherheitsrelevanten Steuervorrichtung und der weiteren Systemkomponente sein. Ein gemeinsamer Datenbus oder dergleichen kann eine solche Verbindung auch herstellen. Es ist aber auch denkbar, dass eine übergeordnete Rechnereinheit die Verbindung zwischen der sicherheitsrelevanten Steuervorrichtung und der weiteren Systemkomponente herstellt, die mit einem ersten Datenbus verbunden ist und mit einem zweiten, davon getrennten Datenbus verbunden ist. Die sicherheitsrelevante Steuervorrichtung ist dann beispielsweise mit dem ersten Datenbus verbunden und die weitere Systemkomponente mit dem zweiten Datenbus. Somit kann dann die sicherheitsrelevante Steuervorrichtung nur indirekt über die übergeordnete Rechnereinheit mit der weiteren Systemkomponente kommunizieren. Das Problem tritt nun dadurch auf, dass die sicherheitsrelevante Steuervorrichtung einen Masseanschluss aufweist, die weitere Systemkomponente einen ersten Betriebszustand und einen zweiten Betriebszustand aufweist und dass die Energieaufnahme dieser weiteren Systemkomponente im ersten Betriebszustand betragsmäßig höher ist als im zweiten Betriebszustand. Hierdurch kommt es beim Betrieb der weiteren Systemkomponente im ersten Betriebszustand der weiteren Systemkomponente zu einem ersten zusätzlichen Masseversatz des Potenzials des Masseanschlusses der sicherheitsrelevanten Steuervorrichtung gegenüber einem Referenzpotenzial, Des Weiteren kommt es beim Betrieb der weiteren Systemkomponente im zweiten Betriebszustand der weiteren Systemkomponente zu einem zweiten zusätzlichen Masseversatz des Potenzials des Masseanschlusses der sicherheitsrelevanten Steuervorrichtung gegenüber einem Referenzpotenzial. Der hier vorgelegte Text nimmt beispielhaft an, dass der zweite Masseversatz auch 0V betragen kann. Beispielhaft nehmen wir also an, dass der Betrag des ersten Masseversatzes größer ist als der Betrag des zweiten Masseversatzes. Dieser zusätzliche Masseversatz kann das zuvor beschriebene Problem verschärfen. Der hier vorgelegte Text schlägt nun vor, dass zur Verminderung der Auswirkungen des Masseversatzes die sicherheitsrelevante Steuervorrichtung einen Wechsel des Betriebszustandes der weiteren Systemkomponente veranlassen kann. Das Fahrzeug kann also im Falle eines Unfalls in einen Unfall-Betriebszustand schalten, in dem die sicherheitsrelevante Steuervorrichtung oder eine übergeordnete Vorrichtung alle unnötigen Verbraucher u.a. zur Verminderung der Masseversätze abschalten. Es kann aber auch vorteilhaft sein, weniger wichtige Systemkomponenten im Normalbetrieb für die Durchführung sicherheitsrelevanter Tests vorübergehend in einen stromsparenden Betriebszustand zu versetzen.

Ein solches Verfahren umfasst dann bevorzugt den Schritt des Feststellens der Notwendigkeit eines sicherheitsrelevanten Tests durch die sicherheitsrelevante Steuervorrichtung. Des Weiteren umfasst ein solches Verfahren dann bevorzugt den Schritt des Umschaltens der weiteren Systemkomponente auf den zweiten Betriebszustand der weiteren Systemkomponente. Außerdem umfasst ein solches Verfahren dann bevorzugt den Schritt des Durchführens des sicherheitsrelevanten Tests durch die sicherheitsrelevante Steuervorrichtung. Die weitere Systemkomponente befindet sich dabei während des sicherheitsrelevanten Tests im zweiten Betriebszustand der weiteren Systemkomponente. Schließlich umfasst ein solches Verfahren dann bevorzugt den Schritt des Beendens des sicherheitsrelevanten Tests und Zurückschalten der weiteren Systemkomponente auf den ersten Betriebszustand der weiteren Systemkomponente.

Wie bereits erwähnt, kann eine übergeordnete Steuereinheit eine indirekte Verbindung der sicherheitsrelevanten Steuervorrichtung mit weiteren Systemkomponenten bereitstellen und darstellen.

Im Folgenden stellt die hier vorgelegte Schrift nun verschiedene, sehr ähnliche Verfahren und deren Varianten vor deren Merkmale ein Anwender der technischen Lehre dieser Schrift bei Sinnhaftigkeit miteinander ausdrücklich kombinieren kann. Die Kombinationen - soweit sinnvoll - sind also ausdrücklich Teil der Offenlegung dieser Schrift, auch wenn verschiedene Merkmale in unterschiedlichen Verfahrensvarianten Erwähnung finden. Ein Beispiel wäre hier z.B. eine Trennvorrichtung, die im Folgenden eine Variante erwähnt, die aber ein Anwender in allen Verfahrensvarianten als Mittel zur Stromaufnahmereduktion einsetzten kann.

### ERSTES VERFAHEREN

Der hier vorgelegte Vorschlag betrifft somit ein Verfahren zum Betrieb einer sicherheitsrelevanten Steuervorrichtung für Fahrzeuge, insbesondere für eine Airbag-Steuervorrichtung in einem Fahrzeug. Das Fahrzeug weist bevorzugt eine weitere Vorrichtung (ECUVC) auf, bei der es sich bevorzugt um eine Ladeschaltung (ECHVC) für die Energiereserve (C) der sicherheitsrelevanten Steuervorrichtung (ECU) handelt. Typischerweise versorgt diese Ladeschaltung (ECUVC) die Steuerschaltung (ECUIC) der sicherheitsrelevanten Steuervorrichtung (ECU) und ggf. andere Vorrichtungsteile der sicherheitsrelevanten Steuervorrichtung (ECU) im ersten Betriebszustand der sicherheitsrelevanten Steuervorrichtung (ECU), also im Normalbetrieb, mit elektrischer Energie. Die Steuervorrichtung (ECU) weist einen internen Massekontakt (GNDi) auf. Das Fahrzeug weist einen anderen Massepunkt (GND), typischerweise die Karosserie des Fahrzeugs als Fahrzeugmasse, auf. Die Steuervorrichtung umfasst die bereits erwähnte Energiereserve (C). Die weitere Vorrichtung kann Teil der Sicherheitsrelevanten Steuervorrichtung (ECU) sein. Beispielsweise kann es sich bei der weiteren Vorrichtung um die Ladeschaltung (ECUVC) der sicherheitsrelevanten Vorrichtung (ECU) handeln. Es kann sich aber auch bei der weiteren Vorrichtung um eine Vorrichtung des Fahrzeugs handeln, die nicht Teil der sicherheitsrelevanten Steuervorrichtung (ECU) ist. Eine solche weitere Vorrichtung kann beispielsweise eine Sitzheizung oder dergleichen sein. Die Stromaufnahme dieser für das hier diskutierte Problem relevanten, weiteren Vorrichtung trägt in einem aktiven Betriebszustand zu einer Vergrößerung des Betrags der Masseversatzspannung (ΔV_{GND}) bei. Die die hier vorgestellte sicherheitsrelevante Steuervorrichtung (ECU) oder eine andere Vorrichtung des Fahrzeugs schalten daher diese weitere Vorrichtung bei einem sicherheitsrelevanten Vorfall ab, sodass die weitere Vorrichtung keinen Strom mehr in die mit der sicherheitsrelevanten Steuervorrichtung gemeinsame Masseleitung einspeist oder nur noch einen wesentlich geringeren Strom in diese Masseleitung einspeist. Die weitere Vorrichtung weist somit im Normalbetrieb eine Stromaufnahme eines elektrischen Stromes zu ihrem Betrieb auf. Dieser elektrische Strom der weiteren Vorrichtung kann zu einem Masseversatz mit einer von 0V verschiedenen Masseversatzspannung (ΔV_{GND}) führen. Diese Masseversatzspannung (ΔV_{GND}) entsteht dabei zwischen dem internen Massekontakt (GNDi) der sicherheitsrelevanten Steuervorrichtung (ECU) einerseits und dem anderen Massepunkt (GND) des Fahrzeugs andererseits. Der andere Massepunkt (GND) kann beispielsweise die Karosserie als Fahrzeugmasse sein. Bei einem Kurzschluss zwischen einer anderen Leitung der sicherheitsrelevanten Steuervorrichtung (ECU) einerseits und diesem anderen Massepunkt (GND) des Fahrzeugs andererseits kann die betreffende kurzgeschlossene Leitung unter das Potenzial des internen Massekontakts (GNDi) des sicherheitsrelevanten Steuergeräts (ECU) geraten. Eine solche andere Leitung der sicherheitsrelevanten Steuervorrichtung (ECU) kann beispielsweise eine Zuleitung eines Sensors der sicherheitsrelevanten Steuervorrichtung (ECU) oder eine Zündleitung (AS1, AS2) einer Zündpille (SQ) eines Airbags sein. Der zuletzt genannte Fall bezieht sich dabei auf den Fall eines Airbag-Steuersystems als sicherheitsrelevanter Steuervorrichtung (ECU). In dem Fall würde dieser Kurzschluss ggf. sehr große Ladeströme aus der Ladeschaltung (ECUVC) entnehmen und dann die sicherheitsrelevante Steuervorrichtung (ECU) beschädigen oder zerstören. In dem Fall könnte die Steuervorrichtung ihre sicherheitsrelevante Funktion nicht mehr ausüben. Wie bereits erwähnt, empfängt die Steuervorrichtung (ECU) Signale von Sensoren und/oder anderen Systemen des Fahrzeugs. Beispielsweise können Datenbusse diese Sensoren und/oder andere Systeme einerseits mit der sicherheitsrelevanten Steuervorrichtung (ECU) andererseits elektrisch und/oder informationstechnisch verbinden. Diese Verbindungen können drahtgebunden oder drahtlos sein. Sofern sie drahtgebunden sind, kommen beispielsweise Datenbus wie der CAN-Datenbus, der PSI5-Datenbus, der DSl3-Datenbus, der Lin-Datenbus PWM-Verbindungen, einfache digitale und analoge Leitungen und/oder Leitungsbündel und dergleichen in Frage. Es kann sich auch um optische Datenbusse über Lichtwellenleiter handeln. Sofern es sich um elektrische Datenbusse handelt, kann ein Kurzschluss zwischen einem solchen elektrischen Datenbus und einem anderen Massepunkt (GND) des Fahrzeugs zu einem ähnlichen Effekt führen. Ein solcher Kurzschluss kann beispielsweise der Kurzschluss eines elektrischen Datenbusses mit der Karosserie des Fahrzeugs sein. Dies kann dann den Effekt haben, dass dann das Potenzial der kurzgeschlossenen Datenleitung unter dem Potenzial des internen Massekontakts (GDi) der sicherheitsrelevanten Steuervorrichtung (ECU) liegt. Wie zuvor kann dann ohne weitere Maßnahmen ein ungehemmter Stromfluss über diese kurzgeschlossene Datenleitung zu dem anderen Massepunkt (GND) einsetzen, der die sicherheitsrelevante Steuervorrichtung in ihrer Funktion beeinträchtigen kann, die Ausübung der sicherheitsrelevanten Funktion durch die sicherheitsrelevante Vorrichtung (ECU) verhindern kann oder sogar die sicherheitsrelevante Vorrichtung beschädigen oder zerstören kann. Im Sinne dieser Schrift weist die sicherheitsrelevante Steuervorrichtung (ECU) einen ersten Betriebszustand für den Normalbetrieb und einen zweiten Betriebszustand für den Fall der Ausübung der sicherheitsrelevanten Funktion auf. Im Falle einer Airbag-Steuerungsvorrichtung (Airbag-Steuergeräts) als sicherheitsrelevante Steuerungsvorrichtung (ECU) ist der erste Betriebszustand der normale Betriebszustand ohne Unfall und der zweite Betriebszustand der Zustand, in dem die Airbag-Steuerungsvorrichtung (ECU) einen Unfall mittels ihrer Sensoren detektiert und Airbags zündet. Die hier vorgelegte Schrift schlägt nun zur Vermeidung der zuvor beschriebenen Probleme somit vor, dass die Energieaufnahme der sicherheitsrelevanten Steuervorrichtung (ECU) im ersten Betriebszustand betragsmäßig höher, nämlich normal, ist als im zweiten Betriebszustand. Dies hat den Vorteil, dass der Stromfluss über die elektrischen Versorgungsleitungen der sicherheitsrelevanten Steuervorrichtung (ECU) in Folge der verminderten Stromaufnahme minimiert ist. Dies reduziert den Masseversatz, in Form einer Masseversatzspannung (ΔV_{GND}), die über den Massewiderstand R_{GND} abfällt. Das wiederum reduziert den Strom, der über einen Kurzschluss (SC1, SC1) eines anderen Anschlusses der sicherheitsrelevanten Steuervorrichtung (ECU) zum den anderen Massepunkt (GND) des Fahrzeugs infolge dieses Kurzschlusses (SC1, SC2) abfließt. Dies wiederum verhindert oder vermindert den Einfluss dieses Kurzschlussstromes auf die Funktionstüchtigkeit der sicherheitsrelevanten Steuerungsvorrichtung (ECU). Insbesondere die im Folgenden noch weiter ausgeführten Maßnahmen betreffend die Ladeschaltung reduzieren den Kurzschlussstrom um typischerweise mehrere Größenordnungen. (z.B. vom A-Bereich in den mA-Bereich). Im ersten und zweiten Betriebszustand kann die sicherheitsrelevante Steuervorrichtung (ECU) ihre sicherheitsrelevante Funktion ausüben. Allerdings sollte die Steuervorrichtung vorzugsweise in den zweiten Betriebszustand wechseln, um die sicherheitsrelevanten Funktion auszuüben. Bevorzugt ist es daher so, dass die sicherheitsrelevante Vorrichtung sich im Normalbetrieb im ersten Betriebszustand und bei der Ausübung der sicherheitsrelevanten Funktion im zweiten Betriebszustand befindet. In dieser Schrift ist dies als "kann" Aussage beschrieben, da die sicherheitsrelevante Steuerungsvorrichtung (ECU) noch im ersten Betriebszustand mit der Ausübung der sicherheitsrelevanten Funktion beginnen kann, bevor sie vollständig den zweiten Betriebszustand eingenommen hat. Wie bereits erwähnt umfasst das Fahrzeug die besagte weitere Vorrichtung. Bevorzugt weist die die weitere Vorrichtung (ECUVC) eine erste Stromaufnahme auf, wenn sich die Steuervorrichtung (ECU) im ersten Betriebszustand befindet und eine zweite Stromaufnahme, wenn sich die sicherheitsrelevante Steuerungsvorrichtung (ECU) im zweiten Betriebszustand befindet. Das in dieser Schrift vorgestellte Verfahren umfasst typischerweise den Schritt des Bereitstellens einer Energiereserve (C). Hierzu stellt das Verfahren beispielsweise einen Kondensator (C) als Energiespeicherelement der sicherheitsrelevanten Steuervorrichtung (ECU) bereit und lädt bevorzugt diesen Kondensator (C) mittels einer Ladeschaltung (ECUVC) auf ein typischerweise vorgesehenes Energieniveau. Bevorzugt steuert eine Steuerschaltung (ECUIC) der sicherheitsrelevanten Steuervorrichtung (ECU) mittels einer Abschaltleitung und/oder weiterer Steuersignale den Ladevorgang der Energiereserve (C) durch die Ladeschaltung (ECUVC). Die sicherheitsrelevante Steuerschaltung (ECUIC) der sicherheitsrelevanten Steuervorrichtung (ECU) wertet typischerweise im Betrieb die Signale der Sensoren und/oder der anderen Systeme aus und schließt ggf. auf einen sicherheitsrelevanten Vorfall, beispielsweise einen Unfall. Bei einem solchen sicherheitsrelevanten Vorfall bringt die Steuerschaltung (ECUIC) der sicherheitsrelevanten Steuervorrichtung (ECU) typischerweise die sicherheitsrelevante Steuervorrichtung (ECU) von dem ersten Betriebszustand in den zweiten Betriebszustand und veranlasst die sicherheitsrelevante Steuervorrichtung (ECU) ihre sicherheitsrelevante Funktion, z.B. das Zünden von Airbags, auszuüben. Das in dieser Schrift vorgestellte Verfahren umfasst daher auch den Schritt des Feststellens eines sicherheitsrelevanten Ereignisses in Abhängigkeit von den Signalen der Sensoren und/oder der anderen Systeme und den Schritt des Umschaltens des Betriebszustands der sicherheitsrelevanten Steuervorrichtung (ECU) auf den zweiten Betriebszustand im Falle eines sicherheitsrelevanten Ereignisses (Vorfall). Mit dieser Umstellung sieht das in dieser Schrift vorgeschlagene Verfahren das Durchführen der sicherheitsrelevanten Funktion der sicherheitsrelevanten Steuervorrichtung (ECU) im zweiten Betriebszustand vor. Um nun die zuvor beschriebenen Probleme auszuschließen, sieht das in dieser Schrift vorgeschlagene Verfahren vor, statt der Versorgung aus dem Bord-Netz des Fahrzeugs über dessen Versorgungsleitungen eine Versorgung der sicherheitsrelevanten Steuervorrichtung (ECU) aus der Energiereserve (C) vorzunehmen, wenn die sicherheitsrelevante Steuervorrichtung (ECU) sich im zweiten Betriebszustand befindet. Gleichzeitig sieht das in dieser Schrift vorgeschlagene Verfahren vor, eine möglichst große Änderung der Stromaufnahme der weiteren Vorrichtung (ECUVC) vorzunehmen, um den sich ergebenden Masseversatz, in Form einer Masseversatzspannung (ΔV), die über den parasitären Massewiderstand R_{GND} auf der Masseversorgungsspannungsleitung abfällt, zu minimieren. Daher konfiguriert bevorzugt die Steuerschaltung (ECUIC) der sicherheitsrelevanten Steuervorrichtung (ECU) oder eine andere Vorrichtung des Fahrzeugs die weitere Vorrichtung um. Bei der weiteren Vorrichtung kann es sich z.B. um die Ladeschaltung (ECUVC) der sicherheitsrelevanten Vorrichtung (ECU) handeln. Dieser Verfahrensschritt programmiert somit die weitere Vorrichtung bevorzugt dann so um, dass die weitere Vorrichtung dann eine zweite Stromaufnahme der weiteren Vorrichtung (ECUVC) zeigt, wenn sich die sicherheitsrelevante Steuervorrichtung (ECU) im zweiten Betriebszustand befindet. Der sich ergebende Masseversatzes fällt in Form einer verringerten Masseversatzspannung (ΔV) über den parasitären Massewiderstand R_{GND} auf der Masseversorgungsspannungsleitung ab. Um den gewünschten Effekt einer Verminderung dieses sich ergebenden Masseversatzes zu erzielen, ist die zweite Stromaufnahme der weiteren Vorrichtung (ECUVC) im zweiten Betriebszustand der sicherheitsrelevanten Steuerungsvorrichtung (ECU) typischerweise betragsmäßig kleiner als der Betrag der ersten Stromaufnahme der weiteren Vorrichtung (ECUVC) im ersten Betriebszustand der sicherheitsrelevanten Steuerungsvorrichtung (ECU). Ist dies erfüllt, so ist die Masseversatzspannung (ΔV_{GND}) im zweiten Betriebszustand der sicherheitsrelevanten Steuerungsvorrichtung (ECU) gegenüber dem ersten Betriebszustand der Steuerungsvorrichtung (ECU) verringert und damit die Robustheit und Betriebssicherheit gesteigert.

### ZWEITES VERFAHEREN

Die hier vorgelegte Schrift umfasst eine zweites ähnliches Verfahren zum Betrieb einer sicherheitsrelevanten Steuervorrichtung (ECU) für Fahrzeuge, insbesondere für eine Airbag-Steuervorrichtung. Wie zuvor geht das Verfahren davon aus, dass die Steuervorrichtung eine Energiereserve aufweist und das Fahrzeug ein elektrisches Bordnetz mit Versorgungsspannungsleitungen aufweist. Dabei ist in der Regel eine Versorgungsspannungsleitung die Karosseriemasse des Fahrzeugs. Diese Versorgungsspannungsleitungen umfassen eine Versorgungsspannungsleitung, die auf der Versorgungsspannung gegenüber der Fahrzeugmasse liegt und die die hier vorgelegte Schrift auch als Versorgungsspannung (V_{bat}) bezeichnet. Wie zuvor empfängt die Steuervorrichtung (ECU) Signale von Sensoren und/oder anderen Systemen. Auch soll die sicherheitsrelevante Steuerungsvorrichtung (ECU) auch wieder einen ersten Betriebszustand und einen zweiten Betriebszustand aufweisen. Wie zuvor ist auch bei diesem Verfahren die Energieaufnahme der sicherheitsrelevanten Steuervorrichtung (ECU) im ersten Betriebszustand betragsmäßig höher ist als im zweiten Betriebszustand. Die sicherheitsrelevante Steuervorrichtung kann ihre sicherheitsrelevante Funktion wie zu vor auch hier in diesem zweiten Verfahren im ersten und zweiten Betriebszustand ausüben. Wir verweisen hier ausdrücklich auf die Ausführungen zum ersten Verfahren, die auch hier zutreffen. Die hier vorgelegte Schrift beschreibt nun ein zweites Verfahren mit einem Schritt des Bereitstellens der Energiereserve (C). Wieder verweisen wir hier auf die obigen Ausführungen zum ersten Verfahren, die auch hier wieder zutreffen. Die hier vorgelegte Schrift beschreibt nun ein zweites Verfahren mit einem Schritt des Auswertens der Signale der Sensoren und/oder der anderen Systeme. Wieder verweisen wir hier auf die obigen Ausführungen zum ersten Verfahren, die auch hier wieder zutreffen. Wie im ersten Verfahren umfasst auch das zweite Verfahren den Schritt des Feststellens eines sicherheitsrelevanten Ereignisses in Abhängigkeit von den Signalen der Sensoren und/oder der anderen Systeme. Wieder verweisen wir hier auf die obigen Ausführungen zum ersten Verfahren, die auch hier wieder zutreffen. Auch hier im zweiten Verfahren erfolgt wie im ersten Verfahren ein Schritt des Umschaltens auf den zweiten Betriebszustand im Falle eines sicherheitsrelevanten Ereignisses. Wieder verweisen wir hier auf die obigen Ausführungen zum ersten Verfahren, die auch hier wieder zutreffen. Wie im ersten Verfahren erfolgt auch im zweiten Verfahren ein Schritt des Durchführens der sicherheitsrelevanten Funktion der sicherheitsrelevanten Steuervorrichtung im zweiten Betriebszustand. Wieder verweisen wir hier auf die obigen Ausführungen zum ersten Verfahren, die auch hier wieder zutreffen. IN diesem zweiten Verfahren erfolgt nun das Versorgen der sicherheitsrelevanten Steuervorrichtung (ECU) im ersten Betriebszustand aus dem elektrischen Bordnetz des Fahrzeugs mittels der Versorgungsspannungsleitungen mit elektrischer Energie. Das zweite Verfahren umfasst das Laden der Energiereserve (C) im ersten Betriebszustand aus dem elektrischen Bordnetz des Fahrzeugs mittels der Versorgungsspannungsleitungen mit elektrischer Energie. Des Weiteren umfasst das zweite Verfahren den Schritt des Trennens der sicherheitsrelevanten Steuervorrichtung (ECU) im zweiten Betriebszustand von dem elektrischen Bordnetz des Fahrzeugs und zwar insbesondere von den Versorgungsspannungsleitungen und zwar insbesondere von der Versorgungsspannung (V_{bat}) mittels einer Trennvorrichtung. Die technische Lehre der hier vorgelegten Schrift soll ausdrücklich die Kombination dieses Vorgehens des zweiten Verfahrens mit dem Vorgehen des ersten Verfahrens umfassen, auch wenn sie sich leicht unterscheiden. Letztlich ist ihnen gemeinsam, den Masseversatz in Form der Masseversatzspannung (ΔV_{GND}) im Falle eines sicherheitsrelevanten Vorfalls zu minimieren. Diese Trennung des zweiten Verfahrens erfolgt unabhängig von der Spannungsdifferenz zwischen dem Potenzial der betreffenden Versorgungsspannungsleitungen (GND) einerseits und dem Potenzial eines Bezugspotenzialknotens (GNDi) der sicherheitsrelevanten Steuervorrichtung (ECU) andererseits erfolgt. Besonders vorteilhaft ist das in diesem zweiten Verfahren vorgesehene Trennen der Energiereserve (C) im zweiten Betriebszustand der sicherheitsrelevanten Steuervorrichtung (ECU) von dem elektrischen Bordnetz des Fahrzeugs und den Versorgungsspannungsleitungen und zwar insbesondere von der Versorgungsspannung (V_{bat}) mittels einer Trennvorrichtung. Hierbei reicht es in der Regel aus, wenn die Trennvorrichtung nur die Versorgungsspannung (V_{bat}) von der Sicherheitsrelevanten Steuervorrichtung und zwar bevorzugt zumindest von der sicherheitsrelevanten Steuerschaltung (ECUIC) trennt. Bevorzugt ist die Trennvorrichtung ein Transistor, den die sicherheitsrelevante Steuerschaltung (ECUIC) der sicherheitsrelevanten Steuervorrichtung (ECU) oder weniger bevorzugt eine andere Teilvorrichtung der sicherheitsrelevanten Steuervorrichtung (ECU) mittels eines Trennsignals, das beispielsweise auch das Abschaltsignal (ECUVCL) sein kann, steuert. Bevorzugt erfolgt diese Trennung unabhängig von der Spannungsdifferenz zwischen dem Potenzial der betreffenden Versorgungsspannungsleitungen, und bevorzugt von dem Potenzial der Fahrzeugmasse (GND), einerseits und dem Potenzial eines Bezugspotenzialknotens (GNDi) des sicherheitsrelevanten Steuergeräts andererseits. Die Versorgung der sicherheitsrelevanten Steuervorrichtung (ECU) mit elektrischer Energie erfolgt bevorzugt in diesem zweiten Verfahren aus der Energie der Energiereserve (C), wenn die sicherheitsrelevante Steuervorrichtung sich im zweiten Betriebszustand befindet. Bei der ersten Trennung und der zweiten Trennung kann es sich um den gleichen Vorgang handeln. Beispielsweise kann eine einzelne Trennvorrichtung die elektrische Verbindung der Energiereserve (C) und der Steuerschaltung (ECUIC) der Steuervorrichtung mit der Versorgungsspannung (V_{bat}) trennen. Diese Verbindung kann indirekt beispielsweise über die Ladeschaltung (ECUVC) erfolgen. Die Trennvorrichtung kann Teil der Ladeschaltung, beispielsweise der Schalttransistor eines Schaltreglers der Ladeschaltung sein.

### DRITTES VERFAHEREN

Die hier vorgelegte Schrift umfasst eine drittes, ähnliches Verfahren zum Betrieb einer sicherheitsrelevanten Steuervorrichtung für Fahrzeuge, insbesondere für eine Airbag-Steuervorrichtung, Wie in den beiden zuvor vorgestellten Verfahrensvarianten geht dieses dritte Verfahren wieder davon aus, dass die sicherheitsrelevante Steuervorrichtung (ECU) eine Energiereserve aufweist und dass das Fahrzeug ein elektrisches Bordnetz mit Versorgungsspannungsleitungen aufweist. Die Ausführungen zu diesem Punkt in den beiden Beschreibungen der beiden vorausgehenden Verfahren treffen typischerweise auf alle drei Verfahren zu. Wie zuvor sollen die Versorgungsspannungsleitungen eine Versorgungsspannung (V_{bat}) umfassen. Die Ausführungen zu diesem Punkt in den beiden Beschreibungen der beiden vorausgehenden Verfahren treffen typischerweise auf alle drei Verfahren zu. Die sicherheitsrelevante Steuervorrichtung soll auch in diesem Verfahren wieder einen ersten Betriebszustand und einen zweiten Betriebszustand aufweisen. Die Ausführungen zu diesem Punkt in den beiden Beschreibungen der beiden vorausgehenden Verfahren treffen typischerweise auf alle drei Verfahren zu. Die Energieaufnahme der sicherheitsrelevanten Steuervorrichtung soll wieder im ersten Betriebszustand der sicherheitsrelevanten Steuervorrichtung betragsmäßig höher sein als im zweiten Betriebszustand der sicherheitsrelevanten Steuervorrichtung. Die Ausführungen zu diesem Punkt in den beiden Beschreibungen der beiden vorausgehenden Verfahren treffen typischerweise auf alle drei Verfahren zu. Im ersten und zweiten Betriebszustand der sicherheitsrelevanten Steuervorrichtung kann wieder die sicherheitsrelevante Steuervorrichtung ihre sicherheitsrelevante Funktion ausüben. Die Ausführungen zu diesem Punkt in den beiden Beschreibungen der beiden vorausgehenden Verfahren treffen typischerweise auf alle drei Verfahren zu. Das hier vorgestellte dritte Verfahren umfasst wieder den Schritt des Bereitstellens einer Energiereserve (C). Die Ausführungen zu diesem Punkt in den beiden Beschreibungen der beiden vorausgehenden Verfahren treffen typischerweise auf alle drei Verfahren zu.

Die hier vorgestellte technische Lehre des dritten Verfahrens schlägt vor, dass beispielsweise die sicherheitsrelevante Steuerschaltung (ECUIC) der sicherheitsrelevanten Steuervorrichtung (ECU) einen Schritt des Feststellens der Notwendigkeit eines sicherheitsrelevanten Tests durchführt. Die Steuerschaltung (ECUIC) der sicherheitsrelevanten Steuervorrichtung (ECU) führt dann vorschlagsgemäß ein Umschalten der sicherheitsrelevanten Steuervorrichtung (ECU) auf den zweiten Betriebszustand der sicherheitsrelevanten Steuervorrichtung (ECU) durch. Vorschlagsgemäß folgt dann der Schritt des Durchführens des sicherheitsrelevanten Tests durch die sicherheitsrelevante Steuervorrichtung (ECU) im zweiten Betriebszustand der sicherheitsrelevanten Steuervorrichtung (ECU). Bevorzugt führt die sicherheitsrelevante Steuerschaltung (ECUIC) der sicherheitsrelevanten Steuervorrichtung (ECU) diesen Test durch. Nach dem Ende des Tests führt bevorzugt die sicherheitsrelevante Steuerschaltung (ECUIC) der sicherheitsrelevanten Steuervorrichtung (ECU) ein typischerweise Zurückschalten der sicherheitsrelevanten Steuervorrichtung (ECU) auf den ersten Betriebszustand der sicherheitsrelevanten Steuervorrichtung (ECU) durch.

In diesem dritten Verfahren versorgt beispielsweise die besagte Ladeschaltung (ECUVC) der Steuervorrichtung (ECU) die sicherheitsrelevante Steuervorrichtung (ECU) im ersten Betriebszustand aus dem elektrischen Bordnetz des Fahrzeugs mittels der Versorgungsspannungsleitungen mit elektrischer Energie. Bevorzugt lädt ie besagte Ladeschaltung (ECUVC) der Steuervorrichtung (ECU) die Energiereserve (C) im ersten Betriebszustand aus dem elektrischen Bordnetz des Fahrzeugs mittels der Versorgungsspannungsleitungen mit elektrischer Energie. Das hier vorgestellte dritte Verfahren sieht ein Trennen der sicherheitsrelevanten Steuervorrichtung (ECU) im zweiten Betriebszustand von dem elektrischen Bordnetz des Fahrzeugs und zwar insbesondere von den Versorgungsspannungsleitungen und zwar insbesondere von der Versorgungsspannung (V_{bat}) mittels einer Trennvorrichtung in einer ersten Trennung vor. Die obigen Ausführungen zur Trennvorrichtung treffen hier typischerweise ausdrücklich auch zu. Gemäß dem hier vorgeschlagenen dritten Verfahren erfolgt diese erste Trennung unabhängig von der Spannungsdifferenz, wobei diese Spannungsdifferenz zwischen dem Potenzial der betreffenden Versorgungsspannungsleitungen einerseits und dem Potenzial eines Bezugspotenzialknoten andererseits anliegt. Mit dem Potenzial der betreffenden Versorgungsspannungsleitungen ist typischerweise insbesondere das Potenzial der Fahrzeugasse (GND) in dieser Schrift gemeint. Mit dem Potenzial des Bezugsknotens ist hier typischerweise insbesondere das Potenzial der internen Masse (GNDi) der sicherheitsrelevanten Steuervorrichtung (ECU) gemeint.

Des Weiteren sieht das dritte Verfahren ein Trennen der Energiereserve im zweiten Betriebszustand von dem elektrischen Bordnetz des Fahrzeugs und den Versorgungsspannungsleitungen mittels einer Trennvorrichtung in einer zweiten Trennung vor. Diese zweite Trennung erfolgt typischerweise ebenfalls unabhängig von der Spannungsdifferenz zwischen dem Potenzial der betreffenden Versorgungsspannungsleitungen (GND) einerseits und dem Potenzial eines Bezugspotenzialknotens (GNDi) des Sicherheitsrelevanten Steuergeräts andererseits. Die hier vorgelegte Schrift weist ausdrücklich auf die obigen Ausführungen zur ersten und zweiten Trennung und der Trennvorrichtung im Zusammenhang mit der Beschreibung des ersten und zweiten Verfahrens hin. Diese Ausführungen treffen auch hier zu. Insbesondere kann der Vorgang der ersten Trennung gleich dem der zweiten Trennung sein. Die Versorgung der sicherheitsrelevanten Steuervorrichtung (ECU) erfolgt gemäß dem dritten Verfahren aus der Energiereserve (C), wenn die sicherheitsrelevante Steuervorrichtung (ECU) sich im zweiten Betriebszustand der sicherheitsrelevanten Steuervorrichtung (ECU) befindet.

### ERSTE VARIANTE DER VORGESTELLTEN VERFAHREN

In einer ersten Variante der drei zuvor beschriebenen Verfahren zum Betrieb einer sicherheitsrelevanten Steuervorrichtung (ECU) weist die Steuervorrichtung (ECU) eine Verbindung zu mindestens einer weiteren Systemkomponente des Fahrzeugs auf. Wie zuvor beschrieben weist die sicherheitsrelevante Steuervorrichtung (ECU) einen Masseanschluss (GNDi) auf. Auch diese weitere Systemkomponente weist einen ersten Betriebszustand und einen zweiten Betriebszustand auf. Die Energieaufnahme dieser weiteren Systemkomponente ist bevorzugt im ersten Betriebszustand betragsmäßig höher ist als im zweiten Betriebszustand. Damit diese weitere Systemkomponente für das hier diskutierte Problem relevant ist, kann ein Betrieb der weiteren Systemkomponente im ersten Betriebszustand der weiteren Systemkomponente einen ersten zusätzlichen Masseversatz des Potenzials des Masseanschlusses der sicherheitsrelevanten Steuervorrichtung (GNDi) gegenüber einem Referenzpotenzial verursachen. Das Referenzpotenzial kann dabei die Fahrzeugmasse (GND) sein. Ein Betrieb der weiteren Systemkomponente im zweiten Betriebszustand der weiteren Systemkomponente kann einen zweiten zusätzlichen Masseversatz des Potenzials des Masseanschlusses (GNDi) der sicherheitsrelevanten Steuervorrichtung (ECU) gegenüber einem Referenzpotenzial (z.B. GND) verursachen, der auch 0V betragen kann. Der Betrag des ersten Masseversatzes ist dabei infolge der größeren Stromaufnahme größer ist als der Betrag des zweiten Masseversatzes infolge der dann geringeren Stromaufnahme. Die weitere Systemkomponente des Fahrzeugs ist also insbesondere dann für diesen Fall relevant, wenn der Massestrom der weiteren Systemkomponente des Fahrzeugs über die gleiche Masseleitung, wie die Masseleitung der sicherheitsrelevanten Steuervorrichtung (ECU) fließt. Der Massestrom verursacht dann einen zusätzlichen Spannungsabfall über den Massewiderstand (R_{GND}) und damit einen zusätzliche Masseversatz (ΔV_{GND}). Das Besondere ist nun, dass die sicherheitsrelevante Steuervorrichtung (ECU) einen Wechsel des Betriebszustandes der weiteren Systemkomponente veranlassen kann. Hierzu schlägt die hier vorgestellte technische Lehre vor, dass die sicherheitsrelevante Steuervorrichtung (ECU) die Notwendigkeit eines sicherheitsrelevanten Tests ggf. feststellt. Die hier vorgestellte Verfahrensvariante sieht dann das Umschalten der weiteren Systemkomponente auf den zweiten Betriebszustand der weiteren Systemkomponente vor. Es folgt das Durchführen des sicherheitsrelevanten Tests durch die sicherheitsrelevante Steuervorrichtung (ECU), wobei sich die weitere Systemkomponente während des sicherheitsrelevanten Tests im zweiten Betriebszustand der weiteren Systemkomponente befindet. Nach dem Durchführen des Tests erfolgen bevorzugt das Beenden des sicherheitsrelevanten Tests und das Zurückschalten der weiteren Systemkomponente auf den ersten Betriebszustand der weiteren Systemkomponente.

### ERSTE UNTERVARIANTE DER VORAUSGEHENDEN VARINATE DER VORGESTELLTEN VERFAHREN

Bei einer erste Untervariante der zuvor vorgestellten Verfahrensvariante handelt es sich um ein Verfahren, dass sich dadurch auszeichnet, dass eine übergeordnete Steuereinheit die Verbindung der sicherheitsrelevanten Steuervorrichtung (ECU) mit weiteren Systemkomponenten, insbesondere der zuvor erwähnten weiteren Systemkomponente, indirekt beispielsweise über ein mittels eines CAN-Datenbusses mit der sicherheitsrelevanten Steuervorrichtung (ECU) bereitstellt. Hierzu weist die sicherheitsrelevante Steuervorrichtung (ECU) bevorzugt einen Datenbusanschluss für einen solchen Datenbus, beispielsweise einen CAN-Bus oder einen CAN-FD-Datenbus auf.

### ZWEITE VARIANTE DES VORGESTELLTEN ERSTEN VERFAHRENS

Die Verfahrensvariante kann gleichzeitig auch eine Variante der zuvor ebenfalls vorgestellten Verfahrensvarianten sein, wenn die vorgeschlagene Vorrichtung diese Verfahren gleichzeitig ausführt. Diese zweite Verfahrensvariante zeichnet sich dadurch aus, dass die sicherheitsrelevante Steuervorrichtung (ECU) eine Steuerschaltung (ECUIC) der sicherheitsrelevanten Steuervorrichtung (ECU) umfasst und dass das Verfahren das Abschalten der Stromaufnahme weiteren Vorrichtung (ECUVC), insbesondere mittels einer Abschaltleitung (ECUVCL), im zweiten Betriebszustand der Steuervorrichtung (ECU) umfasst.

### DRITTE VARIANTE DES VORGESTELLTEN ERSTEN VERFAHRENS

Die Verfahrensvariante kann gleichzeitig auch eine Variante der zuvor ebenfalls vorgestellten Verfahrensvarianten sein, wenn die vorgeschlagene Vorrichtung diese Verfahren gleichzeitig ausführt. Diese dritte Verfahrensvariante umfasst bevorzugt die Beeinflussung der Stromaufnahme der weiteren Vorrichtung (ECUVC) durch die sicherheitsrelevante Steuervorrichtung (ECU) oder einen Vorrichtungsteil der sicherheitsrelevanten Steuervorrichtung (ECU). Diese nutzen bevorzugt eine Abschaltleitung (ECUVCL) für diese Beeinflussung. Der besagte Vorrichtungsteil der sicherheitsrelevanten Steuervorrichtung (ECU) kann insbesondere eine Steuerschaltung (ECUIC) der sicherheitsrelevanten Steuervorrichtung (ECU) sein. Die Beeinflussung erfolgt bevorzugt in Abhängigkeit von dem Betriebszustand der Steuervorrichtung (ECU). Die Beeinflussung erfogt insbesondere bevorzugt mittels einer Abschaltleitung (ECUVCL). Hierzu signalisiert beispielsweise die Steuerschaltung (ECUIC) der sicherheitsrelevanten Steuervorrichtung (ECU) der weiteren Vorrichtung, die beispielsweise die besagte Ladeschaltung (ECUVC) ist, ihre Stromaufnahme zu reduzieren. Im Falle einer Ladeschaltung (ECUVC) umfasst diese beispielsweise bevorzugt einen Transistor als Trennvorrichtung. Bevorzugt steuert die Abschaltleitung (ECUVCL) beispielsweise diesen Transistor und damit die Trennvorrichtung. Im zweiten Betriebszustand der sicherheitsrelevanten Steuervorrichtung (ECU) trennt bevorzugt beispielsweise durch eine solche Signalisierung die Steuerschaltung (ECUIC) der sicherheitsrelevanten Steuervorrichtung (ECU) die direkte oder indirekte Verbindung der Energiereserve (C) und/oder der Steuerschaltung (ECUIC) von der Versorgungsspannung (V_{bat}). Die Stromaufnahme der weiteren Vorrichtung (ECUVC) ist bevorzugt somit im ersten Betriebszustand der Steuervorrichtung (ECU) größer als im zweiten Betriebszustand der sicherheitsrelevanten Steuervorrichtung (ECU).

### UNTERVARIANTE DER ZWEITEN UND DRITTEN VARIANTE

Diese Untervariante des Verfahrens ist dadurch gekennzeichnet, dass die weitere Vorrichtung eine Ladeschaltung (ECUVC) der sicherheitsrelevanten Steuervorrichtung (ECU) ist. Das Verfahren umfasst das Laden der Energiereserve (C) durch die Ladeschaltung im ersten Betriebszustand der Steuervorrichtung (ECU) und das Versorgen einer Steuerschaltung (ECUIC) der Steuervorrichtung (ECU) mit elektrischer Energie der Ladeschaltung (ECUVC) im ersten Betriebszustand der Steuervorrichtung (ECU). Des Weiteren umfasst das Verfahren in dieser Untervariante das Versorgen der Steuerschaltung (ECUIC) der Steuervorrichtung (ECU) mit elektrischer Energie der Energiereserve (C) im zweiten Betriebszustand der Steuervorrichtung (ECU).

### Vorteil

Eine solche Versorgung der sicherheitsrelevanten Steuervorrichtung über die Energiereserve während der Ausführung der sicherheitsrelevanten Funktion reduziert die Angriffsfläche eines Unfallereignisses in Bezug auf eine sicherheitsrelevante Einwirkung auf die sicherheitsrelevante Steuervorrichtung. Ein Kabelbaum ist im gesamten Fahrzeug verteilt. Durch die Versorgung aus der Energiereserve, die zudem bevorzugt in der Nähe oder besser in der sicherheitsrelevanten Steuervorrichtung angebracht wird, wird die Wahrscheinlichkeit einer funktionsbeeinträchtigenden Auswirkung des Unfallereignisses auf die sicherheitsrelevante Vorrichtung signifikant reduziert. Die Vorteile sind hierauf aber nicht beschränkt.

Die Vermeidung von Substratstromauswirkungen kann relevante Chip-Flächen Vergrößerungen bei der integrierten Schaltung für Abstände oder Schutzringe oder interne Schutzdioden und/oder externe Maßnahmen zur Spannungsbegrenzung bedingen. Daher ist es eine wesentlich kostengünstigere Lösung des Problems, die Batterie-Versorgungsströme als Ursache durch die hier vorgeschlagene Nutzung der in Airbag-Systemen ohnehin vorhandenen Energiereserve zur Energieversorgung der Airbag-Steuervorrichtung zu minimieren oder zu vermeiden.

Gegenüber der Lösung mit externen Komponenten oder integrierten Schutzvorrichtungen ist der vorgeschlagene Betriebsmodus eine deutlich kostengünstigere/kostenneutralere Realisierung im Falle von Anforderungen nach einer Robustheit gegenüber einem fehlerhaften Masseversatz bei zeitgleich weiteren vorliegenden Fehlern wie z.B. Kurzschlüssen im System des Fahrzeugs.

Im Vergleich zum Stand der Technik ist die Reduktion der Stromaufnahme eines Moduls kostengünstiger. Diese Reduktion dient dabei der Vermeidung der genannten Problematik. Diese Reduktion ist eine kostengünstigere Alternative im Vergleich zur Behandlung resultierender Ströme mittels weiterer Komponenten.

Bei der Auslegung der vorgeschlagenen Vorrichtung kann der betreffende Konstrukteur außerdem potentiell auf externe Schutzmaßnahmen zur Einhaltung der sicheren Betriebsbereiche bzw. SOA (Vermeidung von EOS) durch den flexiblen Einsatz von stromaufnahmereduzierenden Maßnahmen wie Autarky/Selbstversorgung verzichten oder den resultierenden Aufwand für Schutzmaßnahmen reduzieren.

### Liste der Figuren

Figur 1
   zeigt eine Vorrichtung des relevanten Stands der Technik.
Figur 2
   entspricht der Figur 1 mit einer zusätzlich dritten Diode (D3) und einer vierten Diode (D4).
Figur 3
   zeigt das erfindungsgemäßen Verfahren im zweiten Betriebszustand in schematischer und vereinfachter Weise.
Figur 4
   zeigt prinzipiell und grob vereinfacht den zeitlichen Ablauf.
Figur 5
   zeigt vereinfacht schematisch eine vorschlagsgemäße Vorrichtung, die das Verfahren ausführt, und die Wirkung von Kurzschlüssen.

### Beschreibung der Figuren

### Figur 1

Figur 1 zeigt einen relevanten Stand der Technik. Durch den Massewiderstand (R_{GND}) fällt der Masseversatz als Spannung (ΔV_{GND}) über den Massewiderstand (R_{GND}) der Massezuleitung der Airbag-Steuervorrichtung ab. Die Airbag-Steuervorrichtung steuert die Zündpille (SQ) des Airbags über eine erste Ansteuerleitung (AS1) und eine zweite Ansteuerleitung (AS2) an. Kommt es nun beispielsweise im Rahmen eines Unfalls zu einem niederohmigen Kurzschluss zwischen der ersten Ansteuerleitung (AS1) und der Fahrzeugmasse (GND), so speist die Versorgungsspannung (V_{bat}) einen Strom in die Airbag-Steuervorrichtung ein. Die interne Masse (GNDi) der Steuervorrichtung befindet sich auf einem Potenzial, das sich um den Masseversatz (ΔV_{GND}) über dem Potenzial der Fahrzeugmasse (GND) befindet. Daher speist die Versorgungsspannung (V_{bat}) dadurch auch einen Strom in die sicherheitsrelevante Steuervorrichtung (ECU) ein. Dieser eingespeiste Strom fließt über die mit der Fahrzeugmasse (GND) kurzgeschlossene Ansteuerleitung (AS1, AS2) gegen die Fahrzeugmasse ab. Diesen Strom speist die Versorgungsspannungsleitung (V_{bat}) im Falle einer mikrointegrierten Steuervorrichtung in das Substrat der Steuervorrichtung ein, wo er nur schwer vorhersehbare Effekte hervorrufen kann. Beispielsweise können solche eingespeisten Ströme parasitäre Bipolartransistoren schalten. Die erste Diode (D1) und die zweite Diode (D2) sollen ESD-Schutzstrukturen symbolisieren. Diese werden in diesem Szenario leitend, sobald der Masseversatz (ΔV_{GND}) die Schleusenspannung überschreitet. In der Figur 1 symbolisieren die Widerstände R_{SC1} und R_{SC2} die Widerstände der Kurzschlüsse zwischen der jeweiligen Ansteuerleitung (AS1, AS2) einerseits und der Fahrzeugmasse andererseits.

### Figur 2

Figur 2 entspricht der Figur 1 mit dem Unterschied, dass die dritte Diode (D3) und die vierte Diode (D4) nun den Strom übernehmen, wenn die Spannungsdifferenz zwischen der internen Masse (GNDi) und der Fahrzeugmasse (GND) größer als die Schleusenspannung dieser Dioden ist. Figur 2 gehört zum Stand der Technik.

### Figur 3

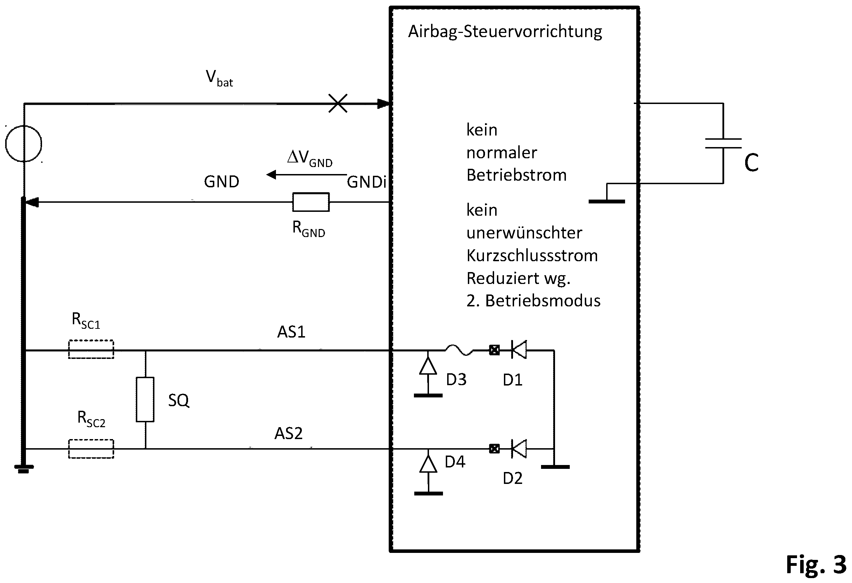

Figur 3 soll den Zustand beim erfindungsgemäßen Verfahren im zweiten Betriebszustand in schematischer und vereinfachter Weise verdeutlichen.

Da die Versorgung der Airbag-Steuervorrichtung nun nicht über die Betriebsspannung (V_{bat}), sondern über die Energiereserve (C) erfolgt, injiziert die Betriebsspannungsquelle keinen elektrischen Strom mehr in die Airbag-Steuervorrichtung. Entscheidend ist, dass die Energiereserve die interne Masse (GNDi) und nicht die Fahrzeugmasse (GND) benutzt. Hierdurch fließt kein Strom über den Massewiderstand (R_{GND}) mit der Konsequenz, dass die Spannung über die Energiereserve (C) die interne Betriebsspannung bestimmt. In diesem Fall unterscheidet sich das Potenzial der inneren Masse nicht vom Potenzial der Fahrzeugmasse, das der Spannungsabfall (ΔV_{GND}) über den Massewiderstand (R_{GND}) verschwindet. Somit fließt auch kein Strom in die Fahrzeugmasse (GND). Eine Injektion parasitärerer Ströme in das Substrat der Steuervorrichtung unterbleibt. Somit beeinträchtigt dann ein Kurzschluss der Ansteuerleitungen einer Zündpille gegen die Masse die anderen Ansteuerleitungen anderer Zündpillen nicht, solange die Energiereserve (C) eine ausreichende Spannung liefert. Diese Lösung schließt damit das Sicherheitsproblem einer ungewollten Strominjektion in das Substrat des ICs aus.

### Figur 4

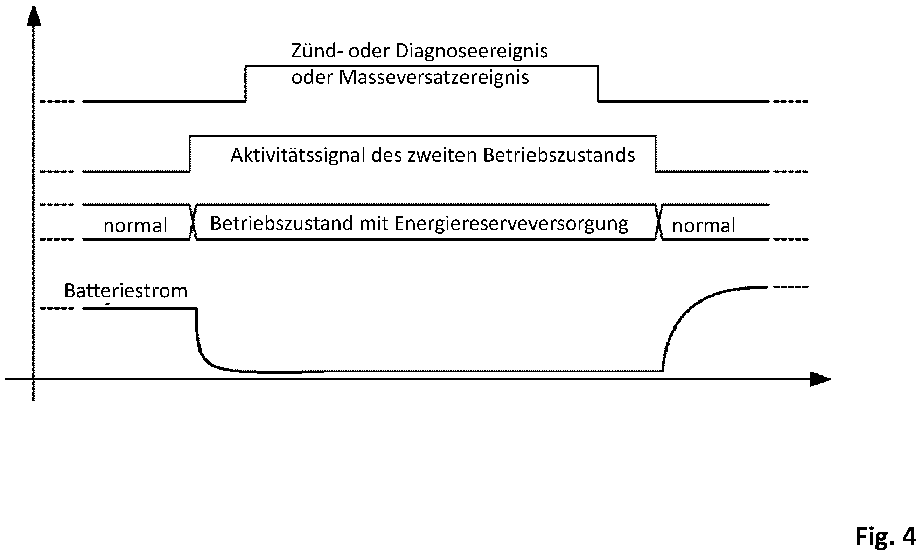

Figur 4 zeigt prinzipiell und grob vereinfacht den zeitlichen Ablauf. Die Steuervorrichtung wechselt vom ersten Betriebszustand mit einem höheren Energieverbrauch in den zweiten Betriebszustand mit einem niedrigeren Energieverbrauch. In diesem zweiten Betriebszustand versorgt die Energiereserve (C) die Steuervorrichtung mit Energie und in Folge dessen geht der Batteriestrom zurück. Die Steuervorrichtung führt dann das Zünd- oder Diagnoseereignis durch. D. h. die Airbag-Steuervorrichtung zündet in diesem zweiten Betriebszustand die Zündpillen, für die eine solche Zündung vorgesehen war. Als weiteres Beispiel könnte die Steuervorrichtung in diesem zweiten Betriebszustand auch einen Test durchführen, also ein Diagnoseereignis durchführen. Nach der Beendigung des zweiten Betriebszustands kehrt die Steuervorrichtung wieder in den ersten Betriebszustand zurück. Da dann die Versorgungspannung (V_{bat}) die Energieversorgung durchführt und da dann nicht die Energiereserve (C) die Energieversorgung durchführt, steigt dann der Batteriestrom aus der Betriebsspannungsquelle über die Versorgungsspannungsleitung (V_{bat}) wieder an. Typischerweise ist zu diesem Zeitpunkt im Übrigen der Strom in der Versorgungsspannungsleitung (V_{bat}) höher als vor der Nutzung der Energiereserve (C). Dies hat den Grund, dass dann die Versorgungsspannung (V_{bat}) die Energiereserve (C), die ja typischerweise ein Kondensator ist, wieder auflädt. Dies erfordert einen zusätzlichen Ladestrom für die Dauer der zeitlichen Ladephase.

### Figur 5

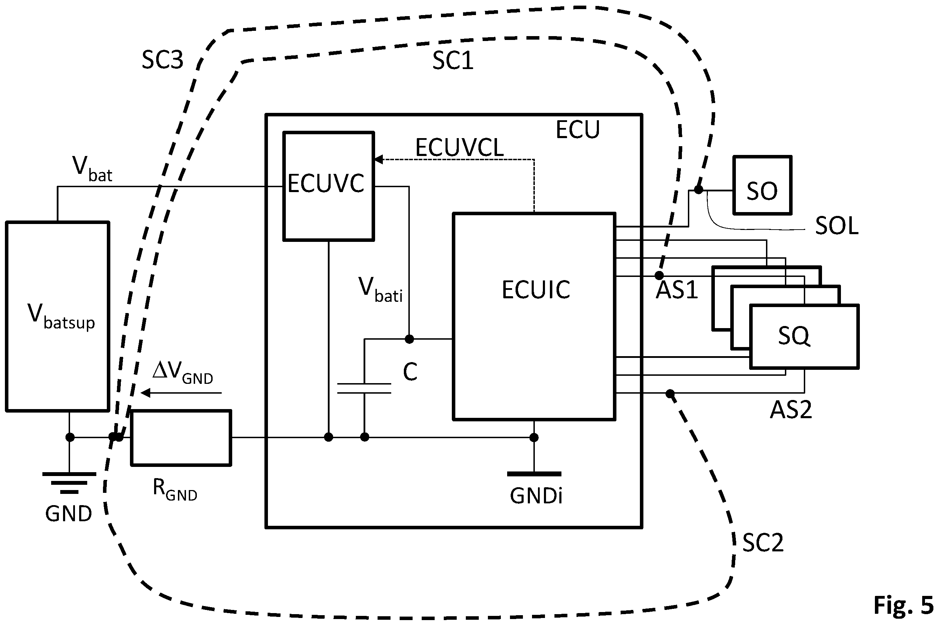

Figur 5 zeigt eine vorschlagsgemäße Vorrichtung, die das vorschlagsgemäße Verfahren ausführt. Die Vorrichtung umfasst eine Spanungsquelle (V_{batsup)} des Fahrzeugs. Die Spannungsquelle (V_{batsup}) des Fahrzeugs erzeugt das Potenzials der Versorgungsspannung (V_{bat}) gegenüber dem Potenzial der Fahrzeugmasse (GND). Die sicherheitsrelevante Steuervorrichtung (ECU) umfasst in dem Beispiel der Figur 5 als weitere Vorrichtung eine Ladeschaltung (ECUVC). Die Ladeschaltung entnimmt elektrische aus der Versorgungsspannung (V_{bat}) und dem Massekontakt der sicherheitsrelevanten Steuervorrichtung (ECU), der die interne Masse der sicherheitsrelevanten Steuervorrichtung (ECU) darstellt. Die Ladeschaltung (ECUVC) lädt in einem ersten Betriebszustand der Ladeschaltung (ECUVC) die Energiereserve (C) in beispielhafter Form eines Kondensators auf das Potenzial einer internen Versorgungsspannung (V_{bati}). In dem Beispiel der Figur 5 versorgt die Ladeschaltung (ECUVC) in dem ersten Betriebszustand der Ladeschaltung (ECUVC) über die interne Versorgungsspannung (V_{bati}) auch die Steuerschaltung (ECUIC) der sicherheitsrelevanten Steuervorrichtung (ECU) mit elektrischer Energie. Die sicherheitsrelevante Steuerschaltung (ECUIC) und die Ladeschaltung (ECHVC) können einstückig monolithisch integriert auf einem Halbleiterkristall gefertigt sein. Die sicherheitsrelevante Steuerschaltung (ECUIC) der sicherheitsrelevanten Steuervorrichtung (ECU) kann über eine Abschaltleitung (ECUVCL) die Ladeschaltung von dem ersten Betriebszustand in einen zweiten Betriebszustand schalten. Die Ladeschaltung (ECUVC) lädt in dem zweiten Betriebszustand der Ladeschaltung (ECUVC) die Energiereserve (C) in beispielhafter Form eines Kondensators nicht. In dem Beispiel der Figur 5 versorgt die Ladeschaltung (ECUVC) in dem zweiten Betriebszustand der Ladeschaltung (ECUVC) die Steuerschaltung (ECUIC) der sicherheitsrelevanten Steuervorrichtung (ECU) nicht mit elektrischer Energie. Im zweiten Betriebszustand versorgt die Energiereserve (C) die sicherheitsrelevante Steuerschaltung (ECUIC) der sicherheitsrelevanten Steuervorrichtung (ECU) und ggf. weitere Teilvorrichtungen der sicherheitsrelevanten Steuervorrichtung (ECU) mit elektrischer Energie. Die Stromaufnahme der Ladeschaltung (ECUIC) und damit der sicherheitsrelevanten Steuervorrichtung (ECU) ist daher im zweiten Betriebszustand herabgesetzt. Der interne Massepunkt (GNDi) der sicherheitsrelevanten Steuervorrichtung (ECU) ist über den parasitären Massewiderstand (R_{GND}) mit der Fahrzeugmasse (GND) verbunden. Dieser parasitäre Massewiderstand (R_{GND}) liegt typischerweise oft bei ca. 2Ohm. Der Stromfluss der Stromaufnahme der sicherheitsrelevanten Steuervorrichtung (ECU) über diesen Massewiderstand (R_{GND}) führt daher zu einem Masseversatz. Der Masseversatz hat eine Masseversatzspannung (ΔV_{GND}). Der Masseversatz kann dann von 0V verschieden sein. Dieser Masseversatz kann daher dann zu den oben beschriebenen Problemen im Fall eines Kurzschlusses (SC1, SC2) einer Anschlussleitung der sicherheitsrelevanten Steuervorrichtung (ECU) mit der Fahrzeugmasse (GND) führen.

Die Figur 5 zeigt beispielhaft eine Airbag-Steuervorrichtung als sicherheitsrelevante Steuervorrichtung (ECU). Die sicherheitsrelevante Steuervorrichtung (ECU) ist mit mehreren Zündpillen über Anschlussleitungen verbunden. Beispielsweise ist eine Zündpille (SQ) der Zündpillen mit einer ersten Anschlussleitung (AS1) und einer zweiten Anschlussleitung (AS2) mit der sicherheitsrelevanten Steuervorrichtung (ECU) verbunden. Die sicherheitsrelevante Steuervorrichtung (ECU) wertet Signale von Sensoren (SO) aus. In dem Beispiel der Figur 5 ist ein beispielhafter Sensor (SO) über eine Sensorleitung (SOL) mit der sicherheitsrelevanten Steuerschaltung (ECUIC) der sicherheitsrelevanten Steuervorrichtung (ECU) verbunden. Die sicherheitsrelevante Funktion realisiert die sicherheitsrelevante Steuervorrichtung (ECU) nun so, dass sie mit Hilfe eines oder mehrerer Sensoren (SO) einen sicherheitsrelevanten Vorfall, beispielsweise einen Unfall detektiert. Hierzu kommuniziert die sicherheitsrelevante Steuervorrichtung (ECU) bevorzugt über die Sensorleitungen (SOL) mit den Sensoren. Beispielsweise kann es sich bei den Sensorleitungen um einen PSl5-Datenbus oder einen DSI3-Datenbus oder dergleichen handeln. Bevorzugt ist es eine sicherheitsrelevante Steuerschaltung (ECUIC) innerhalb der sicherheitsrelevanten Steuervorrichtung (ECU), die diese Kommunikation mit den Sensoren (SO) über die Sensorleitungen (SOL) und die Auswertung der von den Sensoren (SO) übermittelten Werte und/oder Daten ausführt. Ermittelt die sicherheitsrelevante Steuerschaltung (ECUIC) der sicherheitsrelevanten Steuervorrichtung (ECU) einen solchen sicherheitsrelevanten Vorfall, hier beispielsweise einen Unfall, so führt die sicherheitsrelevante Steuervorrichtung (ECUIC) ihre sicherheitsrelevante Funktion aus. In dem Beispiel der Figur 5 ist dies die Zündung der Zündpille (SQ), um die Airbags des beispielhaften Airbag-Systems zu entfalten. Im Rahmen eines Unfalls kann es nun zu einem ersten Kurzschluss (SC1) zwischen der ersten Anschlussleitung (AS1) der Zündpille (SQ) und der Fahrzeugmasse (GND) kommen. Auch kann es im Rahmen eines solchen Unfalls zu einem zweiten Kurzschluss (SC2) zwischen der zweiten Anschlussleitung (AS2) der Zündpille (SQ) und der Fahrzeugmasse (GND) kommen. Des Weiteren kann es bei einem solchen Unfall zu einem dritten Kurzschluss (SC3) zwischen der Sensoranschlussleitung (SOL) eines Sensors (SO) und der Fahrzeugmasse (GND) kommen. Natürlich können bei einem solchen Unfall auch andere Kurzschlüsse von Anschlüssen der sicherheitsrelevanten Steuervorrichtung (ECU) mit der Fahrzeugmasse (GND) vorkommen, die einen ähnlichen destruktiven Effekt haben können. Die Kurzschlüsse (SC1, SC2, SC3) in der Figur 5 sind daher nur beispielhaft. Um den Masseversatz zu minimieren versucht daher vorschlagsgemäß die sicherheitsrelevante Steuervorrichtung (ECU) oder eine andere übergeordnete Vorrichtung den Stromverbrauch der Vorrichtungen, deren Betriebsstrom die gleiche Masseleitung zur Fahrzeugmasse hin ableitet, zu minimieren. Im Falle der Figur 5 bedeutet dies, dass beispielsweise die sicherheitsrelevante Steuerschaltung (ECUIC) der sicherheitsrelevanten Steuervorrichtung (ECU) die Ladeschaltung ((ECUVC) mittels der Abschaltleitung (ECUVCL) abschaltet, wenn die sicherheitsrelevante Steuervorrichtung (ECU) und mit ihr die sicherheitsrelevante Steuerschaltung (ECUIC) vom ersten Betriebszustand in den zweiten Betriebszustand wechselt. Dies verhindert, dass die Ladeschaltung (ECUVC) versucht, einen Strom in die vom Kurzschluss betroffene Leitung einzuspeisen. Die dann auftretenden Ströme sind dann auf wenige mA statt A begrenzt. Die Steuervorrichtung (ECU) kann dann diese reduzierten Ströme in der Regel noch verarbeiten.

### Bezugszeichenliste

- AS1: erste Ansteuerleitung;
- AS2: zweite Ansteuerleitung;
- C: Energiereserve;
- D1: erste Diode;
- D2: zweite Diode;
- D3: dritte Diode;
- D4: vierte Diode;
- ECU: sicherheitsrelevante Steuervorrichtung für das Fahrzeug, beispielsweise ein Airbag-Steuergerät;
- ECUIC: Steuerschaltung der sicherheitsrelevanten Steuervorrichtung (ECU);
- ECUVC: Ladeschaltung der sicherheitsrelevanten Steuervorrichtung (ECU), Diese Ladeschaltung kann der Leser auch als weitere Vorrichtung des Fahrzeugs im Sinne dieser Schrift verstehen.
- ECUVCL: Abschaltleitung mit der die Steuerschaltung (ECUIC) der sicherheitsrelevanten Steuervorrichtung (ECU) die weitere Vorrichtung, hier die Ladeschaltung (ECUVC) der sicherheitsrelevanten Steuervorrichtung, in einen zweiten Betriebszustand bring, in dem die weitere Vorrichtung einen geringeren Strom aus dem Bordnetz entnimmt und damit weniger zur Masseversatzspannung (ΔV_{GND}) beiträgt. In der Regel wird die Steuerschaltung (ECUIC) der sicherheitsrelevanten Steuervorrichtung (ECU) mittels der Abschaltleitung die weitere Vorrichtung ganz abschalten, sodass die dann nicht mehr vorhandene Stromaufnahme der weiteren Vorrichtung bevorzugt nicht mehr zur Masseversatzspannung (ΔV_{GND}) beiträgt;
- GND: Fahrzeugmasse, hier auch als anderer Massepunkt des Fahrzeugs bezeichnet;
- GNDi: interne Masse, hier auch als Massekontakt der sicherheitsrelevanten Steuervorrichtung (ECU) bezeichnet;
- R_{GND}: Massewiderstand;
- R_{SC1}: Widerstand des Kurzschlusses zwischen der ersten Ansteuerleitung (AS1) und der Fahrzeugmasse;
- R_{SC2}: Widerstand des Kurzschlusses zwischen der zweiten Ansteuerleitung (AS2) und der Fahrzeugmasse;
- SC1: erster beispielhafter, möglicher Fehler eines ersten möglichen Kurzschlusses zwischen der ersten Anschlussleitung (AS1) einer beispielhaften Zündpille (SQ) und der Fahrzeugmasse (GND) beispielsweise im Falle eines Unfalls.
- SC2: zweiter beispielhafter, möglicher Fehler eines zweiten möglichen Kurzschlusses zwischen der zweiten Anschlussleitung (AS2) einer beispielhaften Zündpille (SQ) und der Fahrzeugmasse (GND) beispielsweise im Falle eines Unfalls.
- SC3: dritter beispielhafter, möglicher Fehler eines dritten möglichen Kurzschlusses zwischen einer Sensoranschlussleitung (SOL) eines Sensors (SO) und der Fahrzeugmasse (GND) beispielsweise im Falle eines Unfalls.
- SO: Sensor;
- SOL: Sensorleitung;
- SQ: Zündpille;
- V_{bat}: Versorgungsspannung;
- V_{bati}: interne Versorgungsspannung;
- V_{batsup}: Spannungsquelle zur Erzeugung des Potenzials der Versorgungsspannung (V_{bat}) gegenüber dem Potenzial der Fahrzeugmasse (GND)
- ΔV_{GND}: Masseversatz, in Form einer Masseversatzspannung, die über den Massewiderstand R_{GND} abfällt;

## Patentansprüche

1. Verfahren zum Betrieb einer sicherheitsrelevanten Steuervorrichtung (ECU) für Fahrzeuge, insbesondere für eine Airbag-Steuervorrichtung, wobei
- die Steuervorrichtung (ECU) eine Energiereserve (C) aufweist, und
- wobei das Fahrzeug ein elektrisches Bordnetz mit Versorgungsspannungsleitungen aufweist, und
- wobei die Versorgungsspannungsleitungen eine Versorgungsspannung (V_{bat}) umfassen, und
- wobei die sicherheitsrelevante Steuervorrichtung (ECU) einen ersten Betriebszustand und einen zweiten Betriebszustand aufweist, und wobei
- die Energieaufnahme der sicherheitsrelevanten Steuervorrichtung (ECU) im ersten Betriebszustand der sicherheitsrelevanten Steuervorrichtung (ECU) betragsmäßig höher ist als im zweiten Betriebszustand der sicherheitsrelevanten Steuervorrichtung (ECU), und wobei
- im ersten und zweiten Betriebszustand der sicherheitsrelevanten Steuervorrichtung (ECU) die sicherheitsrelevante Steuervorrichtung (ECU) ihre sicherheitsrelevante Funktion ausüben kann,
mit den Schritten
- Bereitstellen der Energiereserve (C);
- Feststellen der Notwendigkeit eines sicherheitsrelevanten Tests;
- Umschalten der sicherheitsrelevanten Steuervorrichtung (ECU) auf den zweiten Betriebszustand der sicherheitsrelevanten Steuervorrichtung (ECU);
- Durchführen des sicherheitsrelevanten Tests durch die sicherheitsrelevante Steuervorrichtung (ECU) im zweiten Betriebszustand der sicherheitsrelevanten Steuervorrichtung (ECU);
- Zurückschalten der sicherheitsrelevanten Steuervorrichtung (ECU) auf den ersten Betriebszustand der sicherheitsrelevanten Steuervorrichtung (ECU);
**gekennzeichnet durch** die Schritte
- Versorgen der sicherheitsrelevanten Steuervorrichtung (ECU) im ersten Betriebszustand aus dem elektrischen Bordnetz des Fahrzeugs mittels der Versorgungsspannungsleitungen mit elektrischer Energie und
- Laden der Energiereserve (C) im ersten Betriebszustand aus dem elektrischen Bordnetz des Fahrzeugs mittels der Versorgungsspannungsleitungen mit elektrischer Energie und
- Trennen in einer ersten Trennung der sicherheitsrelevanten Steuervorrichtung (ECU) im zweiten Betriebszustand von dem elektrischen Bordnetz des Fahrzeugs und zwar insbesondere von den Versorgungsspannungsleitungen und zwar insbesondere von der Versorgungsspannung (V_{bat}) mittels einer Trennvorrichtung,
- wobei diese erste Trennung unabhängig von der Spannungsdifferenz zwischen dem Potenzial der betreffenden Versorgungsspannungsleitungen (GND) einerseits und dem Potenzial eines Bezugspotenzialknotens (GNDi) der sicherheitsrelevanten Steuervorrichtung (ECU) andererseits erfolgt und
- Trennen in einer zweiten Trennung der Energiereserve (C) im zweiten Betriebszustand von dem elektrischen Bordnetz des Fahrzeugs und den Versorgungsspannungsleitungen mittels einer Trennvorrichtung,
- wobei diese zweite Trennung unabhängig von der Spannungsdifferenz zwischen dem Potenzial der betreffenden Versorgungsspannungsleitungen (GND) einerseits und dem Potenzial eines Bezugspotenzialknotens (GNDi) der sicherheitsrelevanten Steuervorrichtung (ECU) andererseits erfolgt und
- wobei die erste Trennung gleich der zweiten Trennung sein kann und
- der Versorgung der sicherheitsrelevanten Steuervorrichtung aus der Energiereserve, wenn die sicherheitsrelevante Steuervorrichtung sich im zweiten Betriebszustand der sicherheitsrelevanten Steuervorrichtung befindet.

2. Verfahren zum Betrieb einer sicherheitsrelevanten Steuervorrichtung gemäß Anspruch 1,
- wobei die Steuervorrichtung eine Verbindung zu mindestens einer weiteren Systemkomponente des Fahrzeugs aufweist und
- wobei die sicherheitsrelevante Steuervorrichtung einen Masseanschluss aufweist und
- wobei diese weitere Systemkomponente einen ersten Betriebszustand und einen zweiten Betriebszustand aufweist und
- wobei die Energieaufnahme dieser weiteren Systemkomponente im ersten Betriebszustand betragsmäßig höher ist als im zweiten Betriebszustand und
- wobei ein Betrieb der weiteren Systemkomponente im ersten Betriebszustand der weiteren Systemkomponente einen ersten zusätzlichen Masseversatz des Potenzials des Masseanschlusses der sicherheitsrelevanten Steuervorrichtung gegenüber einem Referenzpotenzial verursacht und
- wobei ein Betrieb der weiteren Systemkomponente im zweiten Betriebszustand der weiteren Systemkomponente einen zweiten zusätzlichen Masseversatz des Potenzials des Masseanschlusses der sicherheitsrelevanten Steuervorrichtung gegenüber dem Referenzpotenzial verursacht, der auch 0V betragen kann, und
- wobei der Betrag des ersten zusätzlichen Masseversatzes größer ist als der Betrag des zweiten zusätzlichen Masseversatzes und
- wobei die sicherheitsrelevante Steuervorrichtung einen Wechsel des Betriebszustandes der weiteren Systemkomponente veranlassen kann,
mit den Schritten
- Feststellen der Notwendigkeit eines sicherheitsrelevanten Tests durch die sicherheitsrelevante Steuervorrichtung (ECU);
- Umschalten der weiteren Systemkomponente auf den zweiten Betriebszustand der weiteren Systemkomponente;
- Durchführen des sicherheitsrelevanten Tests durch die sicherheitsrelevante Steuervorrichtung,
- wobei sich die weitere Systemkomponente während des sicherheitsrelevanten Tests im zweiten Betriebszustand der weiteren Systemkomponente befindet;
- Beenden des sicherheitsrelevanten Tests und Zurückschalten der weiteren Systemkomponente auf den ersten Betriebszustand der weiteren Systemkomponente.

3. Verfahren zum Betrieb einer sicherheitsrelevanten Steuervorrichtung gemäß Anspruch 2, **dadurch gekennzeichnet,**
**dass** eine übergeordnete Steuereinheit die indirekte Verbindung der sicherheitsrelevanten Steuervorrichtung mit weiteren Systemkomponenten bereitstellt.

4. Verfahren nach Anspruch 1, wobei es sich gleichzeitig auch um ein Verfahren nach den Ansprüchen 2 bis 3 handeln kann, **dadurch gekennzeichnet, dass**
- die sicherheitsrelevante Steuervorrichtung (ECU) eine Steuerschaltung (ECUIC) der sicherheitsrelevanten Steuervorrichtung (ECU) umfasst und
- das Verfahren das Abschalten der Stromaufnahme weiteren Vorrichtung (ECUVC), insbesondere mittels einer Abschaltleitung (ECUVCL), im zweiten Betriebszustand der Steuervorrichtung (ECU) umfasst.

5. Verfahren nach Anspruch 4, wobei es sich gleichzeitig auch um ein Verfahren nach den Ansprüchen 1 bis 3 handeln kann, **dadurch gekennzeichnet,**
**dass** das Verfahren die Beeinflussung der Stromaufnahme der weiteren Vorrichtung (ECUVC), insbesondere mittels einer Abschaltleitung (ECUVCL), durch die sicherheitsrelevante Steuervorrichtung (ECU) oder einen Vorrichtungsteil der sicherheitsrelevanten Steuervorrichtung (ECU), insbesondere eine Steuerschaltung (ECUIC) der sicherheitsrelevanten Steuervorrichtung (ECU), in Abhängigkeit von dem Betriebszustand der Steuervorrichtung (ECU), umfasst,
wobei die Stromaufnahme der weiteren Vorrichtung (ECUVC) im ersten Betriebszustand der Steuervorrichtung (ECU) größer ist als im zweiten Betriebszustand der sicherheitsrelevanten Steuervorrichtung (ECU).

6. Verfahren nach Anspruch 4 oder 5, **dadurch gekennzeichnet, dass**
- die weitere Vorrichtung eine Ladeschaltung (ECUVC) der sicherheitsrelevanten Steuervorrichtung (ECU) ist und
- das Verfahren das Laden der Energiereserve (C) durch die Ladeschaltung im ersten Betriebszustand der Steuervorrichtung (ECU) umfasst und
- das Verfahren das Versorgen einer Steuerschaltung (ECUIC) der Steuervorrichtung (ECU) mit elektrischer Energie der Ladeschaltung (ECUVC) im ersten Betriebszustand der Steuervorrichtung (ECU) umfasst und
- das Verfahren das Versorgen der Steuerschaltung (ECUIC) der Steuervorrichtung (ECU) mit elektrischer Energie der Energiereserve (C) im zweiten Betriebszustand der Steuervorrichtung (ECU) umfasst.

## Claims

1. Method for operating a safety-related control device (ECU) for vehicles, in particular for an airbag control device,
- the control device (ECU) having an energy reserve (C), and
- the vehicle having an electrical on-board power supply system with supply voltage lines, and
- the supply voltage lines comprising a supply voltage (V_{bat}), and
- the safety-related control device (ECU) having a first operating state and a second operating state, and
- the energy consumption of the safety-related control device (ECU) being higher in the first operating state of the safety-related control device (ECU) than in the second operating state of the safety-related control device (ECU), and
- in the first and second operating states of the safety-related control device (ECU), the safety-related control device (ECU) can perform its safety-related function,
with the steps
- providing the energy reserve (C);
- determining the necessity of a safety-related test;
- switching the safety-related control device (ECU) to the second operating state of the safety-related control device (ECU);
- performing the safety-related test by the safety-related control device (ECU) in the second operating state of the safety-related control device (ECU);
- switching back the safety-related control device (ECU) to the first operating state of the safety-related control device (ECU);
**characterized by** the steps of
- supplying the safety-related control device (ECU) in the first operating state from the vehicle's electrical on-board power supply system by means of the supply voltage lines with electrical energy and
- charging the energy store (C) in the first operating state from the vehicle's electrical on-board power supply system by means of the supply voltage lines with electrical energy and
- disconnecting the safety-related control unit (ECU) in a first disconnection operation from the vehicle's electrical system in the second operating state, in particular from the supply voltage lines and in particular from the supply voltage (V bat), by means of a disconnecting device,
- wherein this first disconnection is carried out independently of the voltage difference between the potential of the relevant supply voltage lines (GND) on the one hand and the potential of a reference potential node (GNDi) of the safety-related control device (ECU) on the other hand, and
- disconnecting, in a second disconnection, the energy reserve (C) in the second operating state from the electrical on-board power supply of the vehicle and the supply voltage lines by means of a disconnecting device,
- wherein this second disconnection occurs independently of the voltage difference between the potential of the relevant supply voltage lines (GND) on the one hand and the potential of a reference potential node (GNDi) of the safety-related control device (ECU) on the other hand, and
- wherein the first separation may be equal to the second separation, and
- the supply of the safety-related control device from the energy reserve when the safety-related control device is in the second operating state of the safety-related control device.

2. Method for operating a safety-related control device according to claim 1,
- wherein the control device has a connection to at least one further system component of the vehicle and
- wherein the safety-related control device has an earth connection and
- wherein this further system component has a first operating state and a second operating state and
- wherein the energy absorption of this further system component in the first operating state is higher in terms of magnitude than in the second operating state, and
- wherein operation of the further system component in the first operating state of the further system component causes a first additional mass offset of the potential of the ground connection of the safety-related control device with respect to a reference potential, and
- wherein operation of the further system component in the second operating state of the further system component causes a second additional mass offset of the potential of the ground connection of the safety-related control device with respect to the reference potential, which may also be DV, and
- wherein the amount of the first additional mass offset is greater than the amount of the second additional mass offset, and
- wherein the safety-related control device can cause a change in the operating state of the further system component,
with the steps
- determining the necessity of a safety-related test by the safety-related control device (ECU);
- switching the further system component to the second operating state of the further system component;
- performing the safety-related test by the safety-related control device,
- with the further system component being in the second operating state of the further system component during the safety-related test;
- termination of the safety-related test and switching back of the further system component to the first operating state of the further system component.

3. Method for operating a safety-related control device according to claim 2, **characterized in**
- **that** a higher-level control unit provides the indirect connection of the safety-related control device to further system components.

4. Method according to claim 1, which may at the same time also be a method according to claims 2 to 3, **characterized in that**
- the safety-related control device (ECU) comprises a control circuit (ECUIC) of the safety-related control device (ECU) and
- the method comprises switching off the current consumption of further devices (ECUVC), in particular by means of a switch-off line (ECUVCL), in the second operating state of the control device (ECU).

5. Method according to claim 4, which may at the same time also be a method according to claims 1 to 3, **characterized in**
- **in that** the method comprises influencing the current consumption of the further device (ECUVC), in particular by means of a disconnecting line (ECUVCL), by the safety-related control device (ECU) or a device part of the safety-related control device (ECU), in particular a control circuit (ECUIC) of the safety-related control device (ECU), as a function of the operating state of the control device (ECU),
- wherein the current consumption of the further device (ECUVC) in the first operating state of the control device (ECU) is greater than in the second operating state of the safety-related control device (ECU).

6. Method according to claim 4 or 5, **characterized in that**
- the further device is a charging circuit (ECUVC) of the safety-related control device (ECU) and
- the method comprises charging the energy reserve (C) by means of the charging circuit in the first operating state of the control device (ECU) and
- the method comprises supplying a control circuit (ECUIC) of the control device (ECU) with electrical energy from the charging circuit (ECUVC) in the first operating state of the control device (ECU) and
- the method comprises supplying the control circuit (ECUIC) of the control device (ECU) with electrical energy from the energy store (C) in the second operating state of the control device (ECU).

## Revendications

1. Procédé de fonctionnement d'un dispositif de commande (ECU) relatif à la sécurité pour des véhicules, en particulier pour un dispositif de commande d'airbag, dans lequel
- le dispositif de commande (ECU) présente une réserve d'énergie (C), et
- le véhicule présentant un réseau de bord électrique avec des lignes de tension d'alimentation, et
- les lignes de tension d'alimentation comprenant une tension d'alimentation (V_{bat}), et
- dans lequel le dispositif de commande (ECU) relatif à la sécurité présente un premier état de fonctionnement et un deuxième état de fonctionnement, et dans lequel
- la consommation d'énergie du dispositif de commande relatif à la sécurité (ECU) dans le premier état de fonctionnement du dispositif de commande relatif à la sécurité (ECU) est supérieure en valeur absolue à celle dans le deuxième état de fonctionnement du dispositif de commande relatif à la sécurité (ECU), et dans lequel
- dans le premier et le deuxième état de fonctionnement du dispositif de commande (ECU) relatif à la sécurité, le dispositif de commande (ECU) relatif à la sécurité peut exercer sa fonction relative à la sécurité,
avec les étapes suivantes
- mise à disposition de la réserve d'énergie (C);
- détermination de la nécessité d'un test relatif à la sécurité;
- commutation du dispositif de commande (ECU) relatif à la sécurité dans le deuxième état de fonctionnement du dispositif de commande (ECU) relatif à la sécurité;
- exécution du test relatif à la sécurité par le dispositif de commande (ECU) relatif à la sécurité dans le deuxième état de fonctionnement du dispositif de commande (ECU) relatif à la sécurité;
- le retour du dispositif de commande (ECU) relatif à la sécurité au premier état de fonctionnement du dispositif de commande (ECU) relatif à la sécurité;
**caractérisé par** les étapes consistant à
- alimenter en énergie électrique le dispositif de commande (ECU) relatif à la sécurité dans le premier état de fonctionnement à partir du réseau électrique de bord du véhicule au moyen des lignes de tension d'alimentation, et
- charger la réserve d'énergie (C) dans le premier état de fonctionnement à partir du réseau électrique de bord du véhicule au moyen des lignes de tension d'alimentation avec de l'énergie électrique et
- séparation dans une première séparation du dispositif de commande (ECU) relatif à la sécurité dans le deuxième état de fonctionnement du réseau électrique de bord du véhicule et plus particulièrement des lignes de tension d'alimentation et plus particulièrement de la tension d'alimentation (V bat) au moyen d'un dispositif de séparation,
- cette première séparation s'effectuant indépendamment de la différence de tension entre le potentiel des lignes de tension d'alimentation concernées (GND) d'une part et le potentiel d'un noeud de potentiel de référence (GNDi) du dispositif de commande (ECU) relevant de la sécurité d'autre part, et
- séparation dans une deuxième séparation de la réserve d'énergie (C) dans le deuxième état de fonctionnement du réseau électrique de bord du véhicule et des lignes de tension d'alimentation au moyen d'un dispositif de séparation,
- cette deuxième séparation s'effectuant indépendamment de la différence de tension entre le potentiel des lignes de tension d'alimentation concernées (GND) d'une part et le potentiel d'un noeud de potentiel de référence (GNDi) du dispositif de commande (ECU) relevant de la sécurité d'autre part, et
- la première séparation pouvant être égale à la deuxième séparation et
- l'alimentation du dispositif de commande relatif à la sécurité à partir de la réserve d'énergie lorsque le dispositif de commande relatif à la sécurité se trouve dans le deuxième état de fonctionnement du dispositif de commande relatif à la sécurité.

2. Procédé de fonctionnement d'un dispositif de commande relatif à la sécurité selon la revendication 1,
- dans lequel le dispositif de commande présente une connexion à au moins un autre composant de système du véhicule et
- dans lequel le dispositif de commande relatif à la sécurité présente une connexion de masse et
- dans lequel cet autre composant de système présente un premier état de fonctionnement et un deuxième état de fonctionnement, et
- la consommation d'énergie de cet autre composant du système est plus élevée dans le premier état de fonctionnement que dans le deuxième état de fonctionnement, et
- un fonctionnement de l'autre composant de système dans le premier état de fonctionnement de l'autre composant de système provoquant un premier décalage de masse supplémentaire du potentiel de la borne de masse du dispositif de commande relatif à la sécurité par rapport à un potentiel de référence, et
- un fonctionnement de l'autre composant du système dans le deuxième état de fonctionnement de l'autre composant du système provoquant un deuxième décalage de masse supplémentaire du potentiel de la borne de masse du dispositif de commande relatif à la sécurité par rapport au potentiel de référence, qui peut également être DV, et
- la valeur du premier décalage de masse supplémentaire étant supérieure à la valeur du deuxième décalage de masse supplémentaire, et
- dans lequel le dispositif de commande relatif à la sécurité peut provoquer un
changement de l'état de fonctionnement de l'autre composant du système, avec les étapes suivantes
- détermination de la nécessité d'un test relatif à la sécurité par le dispositif de commande relatif à la sécurité (ECU);
- commutation de l'autre composant du système sur le deuxième état de fonctionnement de l'autre composant du système;
- Exécution du test relatif à la sécurité par le dispositif de commande relatif à la sécurité,
- l'autre composant du système se trouvant dans le deuxième état de fonctionnement de l'autre composant du système pendant le test relatif à la sécurité;
- terminer le test relatif à la sécurité et remettre l'autre composant du système dans le premier état de fonctionnement de l'autre composant du système.

3. Procédé d'exploitation d'un dispositif de commande relatif à la sécurité selon la revendication 2,
**caractérisé en ce que**
- **en ce qu'**une unité de commande supérieure fournit la connexion indirecte du dispositif de commande relatif à la sécurité avec d'autres composants du système.

4. Procédé selon la revendication 1, dans lequel il peut également s'agir simultanément d'un procédé selon les revendications 2 à 3, **caractérisé en ce que**
- le dispositif de commande relatif à la sécurité (ECU) comprend un circuit de commande (ECUIC) du dispositif de commande relatif à la sécurité (ECU), et
- le procédé comprend la coupure de la consommation de courant d'un autre dispositif (ECUVC), notamment au moyen d'une ligne de coupure (ECUVCL), dans le deuxième état de fonctionnement du dispositif de commande (ECU).

5. Procédé selon la revendication 4, sachant qu'il peut également s'agir simultanément d'un procédé selon les revendications 1 à 3, **caractérisé,**
- **en ce que** le procédé comprend l'influence de la consommation de courant de l'autre dispositif (ECUVC), notamment au moyen d'une ligne de coupure (ECUVCL), par le dispositif de commande (ECU) relatif à la sécurité ou une partie de dispositif du dispositif de commande (ECU) relatif à la sécurité, notamment un circuit de commande (ECUIC) du dispositif de commande (ECU) relatif à la sécurité, en fonction de l'état de fonctionnement du dispositif de commande (ECU),
- la consommation de courant de l'autre dispositif (ECUVC) étant plus importante dans le premier état de fonctionnement du dispositif de commande (ECU) que dans le deuxième état de fonctionnement du dispositif de commande (ECU) relatif à la sécurité.

6. Procédé selon la revendication 4 ou 5, **caractérisé en ce que**
- l'autre dispositif est un circuit de charge (ECUVC) du dispositif de commande (ECU) relatif à la sécurité, et
- le procédé comprend la charge de la réserve d'énergie (C) par le circuit de charge dans le premier état de fonctionnement du dispositif de commande (ECU), et
- le procédé comprend l'alimentation d'un circuit de commande (ECUIC) du dispositif de commande (ECU) avec l'énergie électrique du circuit de charge (ECUVC) dans le premier état de fonctionnement du dispositif de commande (ECU) et
- le procédé comprend l'alimentation du circuit de commande (ECUIC) du dispositif de commande (ECU) avec l'énergie électrique de la réserve d'énergie (C) dans le deuxième état de fonctionnement du dispositif de commande (ECU).
